(19) Europäisches Patentamt
European Patent Office
Office européen des brevets

(11) **EP 4 337 465 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **22727769.6**

(22) Anmeldetag: **02.05.2022**

(51) Internationale Patentklassifikation (IPC):
*B23K 26/00* (2014.01)    *B23K 26/0622* (2014.01)
*B23K 26/082* (2014.01)    *B23K 26/352* (2014.01)
*B23K 103/00* (2006.01)    *B41M 3/12* (2006.01)
*B44C 1/10* (2006.01)    *B44C 1/17* (2006.01)
*B44C 3/00* (2006.01)    *B44C 1/22* (2006.01)
*B44F 1/06* (2006.01)

(52) Gemeinsame Patentklassifikation (CPC):
**B44C 1/10; B23K 26/0006; B23K 26/0622; B23K 26/082; B23K 26/352; B44C 1/17; B44C 1/228; B44C 3/005; B44F 1/06;** B23K 2103/42; B41M 3/12

(86) Internationale Anmeldenummer:
**PCT/EP2022/061714**

(87) Internationale Veröffentlichungsnummer:
**WO 2022/238162 (17.11.2022 Gazette 2022/46)**

(54) **VERFAHREN ZUR HERSTELLUNG EINES KUNSTSTOFFARTIKELS**

METHOD FOR THE PRODUCTION OF A PLASTIC ARTICLE

PROCÉDÉ DE FABRICATION D'UN ARTICLE EN MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2021 DE 102021112416**

(43) Veröffentlichungstag der Anmeldung:
**20.03.2024 Patentblatt 2024/12**

(73) Patentinhaber: **LEONHARD KURZ Stiftung & Co. KG**
**90763 Fürth (DE)**

(72) Erfinder:
• **HAHN, Martin**
**91567 Herrieden (DE)**
• **HIRSCHBERG, Steven**
**90763 Fürth (DE)**

(74) Vertreter: **Zinsinger, Norbert**
**Louis Pöhlau Lohrentz**
**Patentanwälte Partnerschaft mbB**
**P.O.Box 30 55**
**90014 Nürnberg (DE)**

(56) Entgegenhaltungen:
EP-A1- 3 815 838    EP-A2- 2 006 119
DE-A1- 102018 123 473    DE-U1- 202019 106 340

EP 4 337 465 B1

**EP 4 337 465 B1**

**Beschreibung**

Die Erfindung betrifft ein Verfahren zur Herstellung eines Kunststoffartikels.

Zur Dekoration von Oberflächen werden häufig Dekorfolien eingesetzt, welche beispielsweise mittels In-Mold-Verfahren auf einen Kunststoffartikel aufgebracht werden. Diese Oberflächen sollen optisch ansprechend sein und auch Dekorelemente, wie beispielsweise Symbole oder Schriftzüge, enthalten.

Derartige Dekorelemente werden meist drucktechnisch auf der Dekorfolie erzeugt. Hierdurch ergeben sich jedoch einige Nachteile. So ist sowohl die Positionierung als auch die Auflösung der Dekorelemente durch das verwendete Druckverfahren limitiert. Sollen insbesondere mit individualisierten Dekorfolien dekorierte Kunststoffartikel oder entsprechende dekorierte Kunststoffartikel in geringen Stückzahlen hergestellt werden, ist dies mit hohem zeitlichen und logistischen Aufwand und damit auch mit hohen Kosten verbunden, da die Druckwerkzeuge wie beispielsweise Druckplatten entsprechend für jede individuelle Dekorfolie bereitgestellt und eingerichtet werden müssen. Alternativ können Dekorelemente, wie beispielsweise Symbole oder Schriftzüge, auch mittels Lasergravur in der Dekorfolie erzeugt werden, wobei diese in ihrer Ausgestaltungsmöglichkeiten, beispielsweise Farbe, beschränkt sind.

DE 10 2018 123473 A1 betrifft eine Dekorfolie, eine Transferfolie, die Verwendung einer Transferfolie, ein Verfahren zur Herstellung einer Transferfolie, ein Verfahren zum Dekorieren eines Kunststoffformteils sowie ein Kunststoffformteil.

EP 3 815 838 A1 ein Verfahren zur Herstellung eines transparenten Fahrzeugteils.

EP 2 006 119 A2 betrifft ein Verfahren zur Herstellung eines beschrifteten oder mit dergleichen Kennzeichen versehenen Kunststoff-Formteiles aus einer unverformten Kunststofffolie. Weiter befasst sie sich auch mit einem KunststoffFormteil, das durch Verformen einer, mit zumindest einer Farb- und/oder Deckschicht versehenen Kunststofffolie hergestellt ist.

DE 20 2019 106340 U1 betrifft ein Kunststoffbauteil, welches zumindest teilweise metallisiert ist, eine durchleuchtbare Symbolik aufweist, und insbesondere für eine Verwendung in einem Kraftfahrzeug vorgesehen ist.

Dieser Erfindung liegt nun die Aufgabe zugrunde, ein verbessertes Verfahren zur Herstellung eines, insbesondere durchleuchtbaren, Kunststoffartikels bereitzustellen.

Diese Aufgabe wird gelöst mit einem Verfahren, insbesondere nach einem der Ansprüche 1 bis 15, wobei das Verfahren die folgenden Schritte umfasst, welche insbesondere in der folgenden Reihenfolge durchgeführt werden:

a) Bereitstellen zumindest einer Folie umfassend eine Trägerfolie und zumindest einer Dekorschicht,
b) Ausbilden mittels Laser zumindest eines ersten Bereichs und zumindest eines zweiten Bereichs in der von der zumindest einen Folie, insbesondere von der Dekorschicht, ausgebildeten Ebene, wobei der zumindest eine zweite Bereich eine höhere Transmission als der zumindest eine erste Bereich aufweist,
c) Anordnen zumindest einer Lackschicht in dem zumindest einen zweiten Bereich mittels Digitaldruck,
d) Aushärten, insbesondere gleichzeitiges Aushärten, der zumindest einen Folie, insbesondere der Dekorschicht, und/oder der zumindest einen Lackschicht,
e) Anordnen der zumindest einen Folie, insbesondere der Dekorschicht, auf einem Substrat,
f) Erhalt eines Kunststoffartikels umfassend den zumindest einen ersten Bereich und den zumindest einen zweiten Bereich.

Unter Bereich wird hierbei insbesondere jeweils eine definierte Fläche einer Schicht, Folie, Ebene oder Lage verstanden, die bei Betrachtung senkrecht zu einer von der Folie, insbesondere von der zumindest einen Dekorschicht, der Lackschicht und/oder des Substrats, ausgebildeten Ebene eingenommen wird.

So weist beispielsweise das zumindest eine Substrat zumindest einen ersten Bereich und einen zumindest zweiten Bereich auf, wobei jeder der zwei oder mehreren Bereiche jeweils eine definierte Fläche bei Betrachtung senkrecht zu einer vom Substrat ausgebildeten Ebene einnimmt, insbesondere in allen oberhalb und/oder unterhalb des Substrats angeordneten Schichten.

Unter den Bezeichnungen unterhalb und/oder oberhalb wird hierbei insbesondere die Anordnung von Schichten in Bezug auf eine andere Schicht bei Betrachtung durch einen Betrachter aus einer Betrachtungsrichtung verstanden. So ist es zweckmäßig, wenn die Bezeichnungen unterhalb und/oder oberhalb ein Bezugssystem darstellen. Vorzugsweise ist die Betrachtungsrichtung so gewählt, dass eine Folie und/oder Schicht, die die Sichtseite des Kunststoffartikels ausbildet oberhalb anderer Folien und/oder Schichten angeordnet ist.

Durch die Erfindung kann eine vorteilhafte Kombination von Transferlackverfahren, insbesondere von Heißprägeverfahren und/oder In-Mold-Decoration (IMD)-Verfahren, und/oder Laminierverfahren, insbesondere In-Mold-Labeling (IML)-Verfahren, Insert-Molding-Verfahren und/oder Print-Mold-Design (PMD)-Verfahren, mit Laser-Verfahren und Digitaldruckverfahren ermöglicht werden.

Die Transferlacktechnologie hat dabei den Vorteil, dass die Gesamtdicke der Dekorschicht im Vergleich zu anderen Dekorationsmethoden, wie beispielsweise Lackieren oder direkter Siebdruck, deutlich dünner hergestellt werden kann. Auch entsteht somit ein niedrigerer Höhenunterschied zwischen Dekorschicht und dem Bereich, in dem die Dekorschicht entfernt wurde, wenn dieses Entfernen der Dekorschicht mittels Laser erfolgt.

Dies ermöglicht eine deutlich einfachere, materialsparendere und ausschussreduzierendere Bedruckung des ausgewählten Bereichs. Damit kann durch diese Kombination die $CO_2$-Bilanz deutlich verbessert und somit auch die Energiekosten reduziert werden.

Weiter bietet die Lasertechnik in direkter Kombination mit DigitaldruckVerfahren weiter eine sehr flexible und variable Fertigungsplattform. Da beide Technologien digital gesteuert werden, können somit im Verfahren Designvariationen, wie Form, Lage und Farbe des zweiten Bereichs, individuell integriert werden. So ist es weiter möglich das gesamte Farbspektrum, welches im Digitaldruck umgesetzt werden kann, auch in diesem Verfahren einzusetzen. Damit sind beispielsweise auch mehrfarbige Bereiche denkbar.

Weiter ist mittels dieser Erfindung vorteilhafterweise möglich, die bevorzugt auf ein Substrat angeordnete Dekorschicht mittels Umformtechnologien, wie beispielsweise Vakuumtiefziehen oder Highpressureforming, in eine 3D-Kontur zu bringen. Insbesondere kann hierbei eine Laserbearbeitung mit Digitaldruckeinbindung auch erst nach der Verformung durchgeführt werden, was die Flexibilität weiter erhöht und das erfindungsgemäße Verfahren weiter von reinen Transferlackverfahren abhebt.

Derzeit ist ein Trend verschiedene Ausführungsvarianten eines Produkts zu fertigen ist in vielen Bereichen der Industrie zu beobachten. So kann es sein, dass ein Dekor in verschiedenen Ländern mit unterschiedlichen Sprachen oder Farben ausgestaltet sein soll. Die vorliegende Erfindung ermöglicht es auf den vorgenannten Trend zu reagieren und das Dekor je nach Bedürfnis zu erstellen. Es ist sogar eine personalisierte Losgröße von eins hierbei möglich.

Dies führt weiter auch zu einer Reduzierung der Lieferzeiten, aber ermöglicht gleichzeitig auch eine höhere Flexibilität auf Höhen und Tiefen in der Produktnachfrage. Weiterhin werden logistische Arbeiten sowie deren Kosten deutlich weiter reduziert, da die Varianten im Produktionsprozess bei Bedarf erzeugt werden können und nicht mehr auf Vorratslagerhaltung. In anderen Worten kann der Endkunde entscheiden, wie beispielsweise ein Panel einer Waschmaschine gestaltet sein soll und hat dabei eine unbegrenzte Farbwahl der in die Dekorschicht eingebrachten Symbole.

Weitere vorteilhafte Ausgestaltungen der Erfindung sind in den Unteransprüchen bezeichnet.

Es hat sich als vorteilhaft erwiesen, dass die in Schritt a) zumindest eine bereitgestellte Folie, insbesondere Dekorschicht, bevorzugt als eine Transferfolie, insbesondere umfassend eine Trägerfolie und eine von der Trägerfolie ablösbare Transferlage, oder Laminierfolie bereitgestellt wird oder als eine derartige Folie ausgestaltet ist. Mit anderen Worten ist es möglich, dass die Trägerfolie während des Verfahrens abgezogen wird, insbesondere vor, während oder nach Schritt e).

Vorzugsweise ist die zumindest eine Folie, insbesondere die Dekorschicht, eine Schicht mit Komponenten, insbesondere Bindemitteln, einzeln oder in Kombination ausgewählt aus: Monomeren, Oligomeren, Polymeren, Copolymeren, bevorzugt umfassend einzeln oder in Kombination ausgewählt aus: Polymethylmethacrylate, Polyester, Polyacrylate, Polycarbonate, Polyamide, Polyurethane, Polyvinylchlorid (PVC), Phenole, Isocyanatgruppen-haltige Polymere, Epoxidgruppen-haltige Polymere, Melamin-haltige Polymere, Hydroxylgruppen-haltige Polymere, weiter bevorzugt umfassend Polyurethane und/oder PVC, ist.

Um zusätzlich eine vorteilhafte Überdruckbarkeit der Dekorschicht zu erreichen, weist die Dekorschicht insbesondere eine Annahmeschicht auf, die wenigstens ein in Wasser dispergierbares Polymer aufweist, das jeweils unabhängig voneinander ausgewählt wird aus der Gruppe, die aus Polyurethanen, Polyacrylaten, Polymethacrylaten, Polyestern, Copolymeren davon und Mischungen davon besteht, vorzugsweise ausgewählt aus Polyurethanen, Polyurethan/Polyacrylat-Copolymeren, Polyacrylaten und/oder Polymethacrylaten, Polyestern und Mischungen davon, wobei das wenigstens eine in Wasser dispergierbare Polymer bevorzugt ein Polyurethan-haltiges Polymer, das vorzugsweise ausgewählt wird aus der Gruppe, die aus Polyurethanen, Polyurethan/Poly(meth)acrylat-Copolymeren und Mischungen davon besteht, ist.

Um zusätzlich eine ausreichend hohe Beständigkeit der Dekorschicht gegen chemische und/oder physikalische Einflüsse zu erreichen, weist die Dekorschicht wenigstens eine Schutzschicht auf, die insbesondere auf Basis wenigstens eines UV-vernetzbaren und/oder chemisch-vernetzbaren Polymers hergestellt ist. Es ist dafür weiter möglich, dass die wenigstens eine Schutzschicht weiterhin wenigstens ein chemisch vernetzbares Polymer, das weiter bevorzugt aus der Gruppe, die aus Isocyanatgruppen-haltigen Polymeren, Melamin-haltigen Polymeren, Hydroxylgruppen-haltigen Polymeren und Mischungen davon besteht, ausgewählt wird, aufweist. Die wenigstens eine Schutzschicht weist bevorzugt wenigstens eine chemisch vernetzbare Polymer-Kombination auf, die ein Polymer und/oder Copolymer mit wenigstens einer, vorzugsweise zwei oder mehr, Isocyanat-Gruppe(n) und wenigstens ein Polymer und/oder Copolymer mit wenigstens einer, vorzugsweise zwei oder mehr, Hydroxyl-Gruppe(n) und/oder wenigstens ein Melaminharz und wenigstens ein Polymer und/oder Copolymer mit wenigstens einer, vorzugsweise zwei oder mehr, Hydroxyl-Gruppe(n) umfasst oder ist.

Es ist weiter möglich, dass das wenigstens eine UV-vernetzbare Polymer der wenigstens einen Schutzschicht und/oder der Annahmeschicht weiterhin jeweils unabhängig voneinander wenigstens eine chemisch vernetzbare funktionelle Gruppe aufweist, wobei die chemisch vernetzbare funktionelle Gruppe bevorzugt ausgewählt wird aus Hydroxyl-Gruppe, Isocyanat-Gruppe, Melamin-Gruppe, Epoxid-Gruppe und Kombinationen davon.

Bevorzugt weist das wenigstens eine UV-vernetzbare Polymer weiterhin wenigstens eine Hydroxyl-Gruppe auf.

Geeignete UV-vernetzbare Hydroxyl-Gruppen-haltige Polymere sind aus dem Stand der Technik bekannt und umfassen beispielsweise wenigstens ein Diacrylatmonomer, aliphatisches Polyetherurethandiacrylat, aliphatisches Polyesterurethandiacrylat, aromatisches Polyetherurethandiacrylat, aromatisches Polyesterurethandiacrylat, Polyesterdiacrylat, Polyetherdiacrylat, Epoxydiacrylat, acryliertes Acryldiacrylat, Polyacrylatmonomer, aliphatisches Polyetherurethanpolyacrylat, aliphatisches Polyesterurethanpolyacrylat, aromatisches Polyetherurethanpolyacrylat, aromatisches Polyesterurethanpolyacrylat, Polyesterpolyacrylat, Polyetherpolyacrylat, Epoxypolyacrylat, acryliertes Acrylpolyacrylat oder Mischungen davon und/oder wenigstens ein Hydroxymonoacrylat, Hydroxydiacrylat, Hydroxypolyacrylat, hydroxyfunktionalisiertem aliphatischem Polyetherurethanmonoacrylat, hydroxyfunktionalisiertem aliphatischem Polyesterurethanmonoacrylat, hydroxyfunktionalisiertem aromatischen Polyetherurethanmonoacrylat, hydroxyfunktionalisiertes aromatisches Polyesterurethanmonoacrylat, hydroxyfunktionalisiertes Polyestermonoacrylat, hydroxyfunktionalisiertes Polyethermonoacrylat, hydroxyfunktionalisiertes Epoxymonoacrylat, hydroxyfunktionalisiertes acryliertes Acrylmonoacrylat, hydroxyfunktionalisiertes aliphatisches Polyetherurethandiacrylat, hydroxyfunktionalisiertes aliphatisches Polyesterurethandiacrylat, hydroxyfunktionalisiertes aromatisches Polyetherurethandiacrylat, hydroxyfunktionalisiertes aromatisches Polyesterurethandiacrylat, hydroxyfunktionalisiertes Polyesterdiacrylat, hydroxyfunktionalisiertes Polyetherdiacrylat, hydroxyfunktionalisiertes Epoxydiacrylat, hydroxyfunktionalisiertes acryliertes Acryldiacrylat, hydroxyfunktionalisiertes aliphatisches Polyetherurethanpolyacrylat, hydroxyfunktionalisiertes aliphatisches Polyesterurethanpolyacrylat, hydroxyfunktionalisiertes aromatisches Polyetherurethanpolyacrylat, hydroxyfunktionalisiertes aromatisches Polyesterurethanpolyacrylat, hydroxyfunktionalisiertes Polyesterpolyacrylat, hydroxyfunktionalisiertes Polyetherpolyacrylat, hydroxyfunktionalisiertes Epoxypolyacrylat, hydroxyfunktionalisiertes acryliertes Acrylat oder Mischungen davon.

Als Melaminharze sind insbesondere solche geeignet, die durch Umsetzung von Melamin mit Aldehyden erhältlich sind und gegebenenfalls teilweise oder vollständig modifiziert werden können.

Als Aldehyde sind insbesondere Formaldehyd, Acetaldehyd, Iso-Butyraldehyd und Glyoxal geeignet.

Melamin-Formaldehyd-Harze sind vorzugsweise Reaktionsprodukte der Umsetzung von Melamin mit Aldehyden, beispielsweise den oben genannten Aldehyden, insbesondere Formaldehyd. Bevorzugt werden die erhaltenen Methylol-Gruppen durch Veretherung mit ein- oder mehrwertigen Alkoholen modifiziert.

Weiter ist es möglich, dass die wenigstens eine Schutzschicht Precured Systeme und/oder Hybridsysteme aufweist. Es ist insbesondere möglich, dass die wenigstens eine Schutzschicht wenigstens eine UV-härtbare Komponente aus UV-härtbaren Monomeren und/oder UV-härtbaren Oligomeren oder Mischungen davon aufweist und weiterhin wenigstens ein Bindemittel aufweist, das aus der Gruppe, die aus Polyurethanen, Polyacrylaten, Polymethacrylaten, Polyesterharzen, Polycarbonaten, Phenolharzen, Epoxidharzen, Polyharnstoffen, Melaminharzen, bevorzugt Polymethylmethacrylat (PMMA), Polyester, Polycarbonat (PC) und Mischungen davon besteht, ausgewählt wird.

Es ist weiter möglich, dass die wenigstens eine Schutzschicht vorzugsweise wenigstens ein Polyisocyanat umfasst. Der Begriff "Polyisocyanat" beschreibt bevorzugt eine organische Verbindung mit zwei oder mehr Isocyanat-Gruppen, einschließlich Triisocyanate und Isocyanate mit höherer Funktionalität. In bestimmten Ausführungsformen wird das wenigstens eine Polyisocyanat aus der Gruppe ausgewählt, die aus Diisocyanatmonomer, Diisocyanatoligomer, Diisocyanat-terminiertem Präpolymer, Diisocyanat-terminiertem Polymer, Polyisocyanatmonomer, Polyisocyanatoligomer, Polyisocyanat-terminiertem Präpolymer, Polyisocyanat-terminiertem Polymer, Polyisocyanat-terminiertem Polymer und Mischungen davon besteht.

Weiter bevorzugt umfasst oder ist das wenigstens eine Polyisocyanat wenigstens eine diisocyanathaltige Komponente, die vorzugsweise mindestens ein diisocyanathaltiges Polyurethanoligomer, diisocyanathaltiges Polyharnstoffoligomer, Präpolymere davon, Polymer davon oder Mischungen davon enthält.

**In** bestimmten Ausführungsformen umfasst oder ist das wenigstens eine Polyisocyanat wenigstens eine diisocyanathaltige Komponente, die vorzugsweise aus der Gruppe, die aus Hexamethylendiisocyanat (HDI), Isophorondiisocyanat (IPDI), Methylendiphenyldiisocyanat (MDI), Toluoldiisocyanat (TDI), Phenylendiisocyanat, Naphthalindiisocyanat, Diphenylsulfondiisocyanat, Ethylendiisocyanat, Propylendiisocyanat, Dimere dieser Diisocyanate, Trimer dieser Diisocyanate, Triphenylmethantriisocyanat, Polyphenylmethanpolyisocyanat (polymeres MDI) und Mischungen davon besteht, ausgewählt wird.

Weiter kann es von Vorteil sein, wenn die zumindest eine Folie, insbesondere die Dekorschicht, Schichten aufweist, insbesondere zumindest jeweils eine oder mehrere der folgenden Schichten aufweist, jeweils einzeln oder in Kombination ausgewählt aus: zumindest eine Farblackschicht, zumindest eine Metallschicht, zumindest eine Kleberschicht, zumindest eine Haftvermittlerschicht, zumindest eine Barriereschicht, zumindest eine Annahmeschicht zumindest eine Schutzlackschicht, zumindest eine Ablöseschicht, zumindest eine Replikationsschicht, zumindest eine Laserschutzlackschicht.

Es ist weiter vorteilhaft, wenn die zumindest eine Dekorschicht die Transferlage ausbildet und von der Trägerfolie ablösbar ist.

Eine derartige Ausgestaltung erhöht die Möglichkeiten einer Individualisierung, die optische Wertigkeit und/oder die Anwendungsmöglichkeiten noch weiter. Die Folie kann auch mehrschichtige Farblacksysteme aufweisen, bei denen mittels Lasers eine oder mehrere Schichten abgetragen werden und somit die darunterliegende Schicht sichtbar wird. Hierdurch lassen sich individuelle Gestaltungen realisieren.

Bevorzugt weist die zumindest eine Folie, insbesondere die Dekorschicht, eine Schichtdicke ausgewählt aus einem Bereich von 0,1 $\mu$m bis 50 $\mu$m, bevorzugt von 0,5 $\mu$m bis 35 $\mu$m, bevorzugt von 1 $\mu$m bis 5 $\mu$m, auf.

Weiter kann die zumindest eine Folie, insbesondere die Dekorschicht, eine Metallisierung aufweisen, insbesondere mit einer Schichtdicke von 1 nm bis 20 $\mu$m, bevorzugt von 5 nm bis 15 $\mu$m. Bevorzugt ist die Metallisierung aus Metallen und/oder Metallkombinationen und/oder Legierungen ausgebildet, einzeln oder in Kombination ausgewählt aus: Aluminium, Kupfer, Kobalt, Gold, Indium, Eisen, Chrom, Nickel, Silber, Platin, Palladium, Titan.

Es ist möglich, dass in Schritt e) die zumindest eine Folie, insbesondere die Dekorschicht, vollflächig auf dem Substrat angeordnet ist und/oder wird. Hierdurch sind die optischen Eigenschaften des fertigen Produkts unabhängig von den optischen Eigenschaften des Substrats und es werden somit die Gestaltungsmöglichkeiten des fertigen Produkts erhöht.

Alternativ kann in Schritt e) die zumindest eine Folie, insbesondere die Dekorschicht, nur bereichsweise auf dem Substrat angeordnet werden oder sein, wobei insbesondere das Substrat für einen Betrachter sichtbar ist, insbesondere in Blickrichtung auf die der Dekorschicht zugewandten Seite des Substrats. Beispielsweise kann die Dekorschicht in Randbereichen oder Bereichen im Zentrum des Substrats nicht angeordnet werden oder sein. Dies ist vorteilhaft, wenn diese Bereiche im fertigen Produkt nicht sichtbar sind und/oder es gewünscht ist, dass die optischen Eigenschaften des Substrats erkennbar bleiben. Es ist auch möglich, dass in den Bereichen, in denen die Dekorschicht nicht angeordnet ist, andere Schichten oder Schichtpakete auf dem Substrat angeordnet sind. Es ist auch möglich, dass in den Bereichen, in denen die Dekorschicht nicht angeordnet ist, keine Schichten auf dem Substrat angeordnet sind, das heißt das Substrat in diesen Bereichen unbeschichtet ist.

Es ist insbesondere vorteilhaft, wenn die zumindest eine Folie, insbesondere die Dekorschicht, opak ausgebildet ist und/oder wenn die zumindest eine Folie, insbesondere die Dekorschicht, eine Transmission, das heißt eine Durchlässigkeit für elektromagnetische Wellen insbesondere im Wellenlängenbereich von 380 nm bis 780 nm, von maximal 50 %, bevorzugt von maximal 20 %, weiter bevorzugt von maximal 5 %, aufweist.

Hierdurch wird erreicht, dass die zumindest eine Folie, insbesondere die Dekorschicht, einen optisch dunklen Eindruck erzeugt, insbesondere wobei der optische Eindruck einen dunkel erscheinenden Hintergrund im Hinblick auf eine mögliche Hinterleuchtung zur Verfügung stellt. Dadurch kann insbesondere ein besonders hoher Kontrast zwischen der Hinterleuchtung und diesem Hintergrund erreicht werden und die Hinterleuchtung kann auch bei geringen Hinterleuchtungs-Lichtstärken ausreichend gut wahrgenommen werden.

Die Transmission wird insbesondere mit einem Spektralphotometer bestimmt, beispielsweise vom Typ U-2000, Hitachi Ltd. Corp., Japan, bevorzugt in einem Wellenlängenbereich zwischen 380 nm und 780 nm.

Es ist möglich, dass in Schritt e) die zumindest eine Folie, insbesondere die Dekorschicht, mit einem Transferlackverfahren, insbesondere einem Heißprägeverfahren, und/oder einem IMD-Verfahren, und/oder mit einem Laminierverfahren, insbesondere einem IML-Verfahren, einem Insert-Molding-Verfahren und/oder einem PMD-Verfahren, angeordnet wird.

Weiter ist es möglich, dass die zumindest eine Folie, insbesondere die Dekorschicht, derart auf dem Substrat angeordnet wird und/oder ist, dass die Dekorschicht einem Betrachter zugewandt ist.

Es ist auch möglich, dass die zumindest eine Folie, insbesondere die Dekorschicht, auf der dem Betrachter abgewandten Seite des Substrats angeordnet wird und/oder ist. Hierdurch ist es möglich, dass das Substrat die Dekorschicht vor äußeren, insbesondere physikalischen und/oder chemischen, Einflüssen und/oder Belastungen schützt.

Es ist somit möglich, dass die zumindest eine Folie, insbesondere die Dekorschicht, unterhalb und/oder oberhalb des Substrats angeordnet ist.

Bevorzugt wird die zumindest eine Folie, insbesondere die Dekorschicht, derart auf das Substrat angeordnet, dass sie fest mit dem Substrat fest verbunden ist.

Unter dem Begriff fest verbunden wird hierbei bevorzugt eine beständige Verbindung von zwei Elementen verstanden, so dass sich diese nicht mehr mechanisch trennen lassen ohne zumindest eines der Elemente zu beschädigen.

In Schritt b) wird die Folie, insbesondere die Dekorschicht, mittels Laser derart bestrahlt, dass zumindest ein erster und ein zweiter Bereich ausgebildet werden, wobei der zumindest zweite Bereich eine höhere Transmission aufweist. Insbesondere ist es vorteilhaft, wenn in Schritt b) die zumindest eine Folie, insbesondere die Dekorschicht, in dem zumindest einen zweiten Bereich entfernt, vorzugsweise vollständig entfernt, wird und/oder ist.

Es ist auch möglich, dass der zumindest eine zweite Bereich derart ausgebildet wird, dass zumindest eine der Schichten der Dekorschicht entfernt wird. Insbesondere ist es möglich, dass der zumindest eine zweite Bereich derart ausgebildet wird, dass zumindest eine der Schichten der Dekorschicht, bevorzugt zumindest eine Farblackschicht, im zumindest einen zweiten Bereich nicht entfernt, vorzugsweise nicht vollständig entfernt, wird. Somit ist es möglich, dass insbesondere nach Schritt b) im zumindest einen zweiten Bereich zumindest eine Farblackschicht angeordnet ist.

Unter Entfernen einer Schicht wird hierbei das teilweise und/oder vollständige Entfernen einer Schicht, insbesondere mittels Laserschneiden und/oder Laserablation, verstanden. Wird beispielsweise eine Schicht in einem Bereich entfernt, ist die entsprechende Schicht in diesem Bereich teilweise und/oder vollständig entfernt worden. Die Entfernung erfolgt hierbei bevorzugt aufgrund von Laserschneiden und/oder Laserablation.

Unter teilweise entfernt wird hierbei bevorzugt verstanden, dass die teilweise entfernte Schicht derart verändert bzw. zerstört wird, dass diese ihre vorbestimmten Eigenschaften nicht mehr erfüllt. So erfüllt beispielsweise eine teilweise entfernte Schutzlackschicht nicht mehr ihre vorbestimmte Eigenschaft darunter angeordnete Schichten vor chemischen, physikalischen und/oder mechanischen Umwelteinflüssen zu schützen.

Unter vollständig entfernt wird hierbei bevorzugt verstanden, dass die vollständig entfernten Schichten in den entsprechenden Bereichen rückstandslos abgetragen und/oder ablatiert und/oder verbrannt und/oder verdampft werden. Wird so beispielsweise die zumindest eine Dekorschicht in dem zumindest einen zweiten Bereich, insbesondere mittels Laserschneiden und/oder Laserablation, vollständig entfernt, so ist die zumindest eine Dekorschicht in dem zumindest zweiten Bereich rückstandslos abgetragen.

Vorteilhafterweise beträgt der Unterschied in der Transmission zwischen dem zumindest einen ersten Bereich und dem zumindest einen zweiten Bereich des Kunststoffartikels nach Schritt f) bevorzugt zumindest 5 %, vorzugsweise zumindest 10 %, besonders bevorzugt zumindest 25 %, insbesondere im Wellenlängenbereich von 380 nm bis 780 nm. Vorzugsweise weist der zumindest eine zweite Bereich im Kunststoffartikel eine höhere Transmission als der zumindest eine erste Bereich auf. Hierdurch wird sichergestellt, dass ein hinreichender Kontrast im Durchlicht vorhanden ist, so dass ein scharfes und gut erkennbares Dekor entsteht.

Insbesondere wird und/oder ist zumindest ein zweiter Bereich in Form von einem Symbol, einer geometrischen Figur, einem Muster, einem alphanumerischen Zeichen und/oder einem Logo ausgestaltet oder umfasst diese. Diese Formen können auch mit abstrakten grafischen Designelementen kombiniert werden. Die Ausgestaltung des zumindest einen zweiten Bereichs kann eine rein verzierende Funktion besitzen, aber vorzugsweise auch funktional sein und beispielsweise Anzeige- oder Bedienungselemente eines Geräts, wie Statusanzeigen, Bedienflächen oder dergleichen markieren.

Es ist weiter bevorzugt, wenn der zumindest eine zweite Bereich bei Betrachtung senkrecht auf die zumindest eine Folie, insbesondere Dekorschicht, eine Linienstärke von mindestens 50 $\mu$m, bevorzugt von mindestens 100 $\mu$m, aufweist und/oder wenn der zumindest eine zweite Bereich bei Betrachtung senkrecht auf die zumindest eine Folie, insbesondere Dekorschicht, eine Linienstärke von maximal 2 mm, bevorzugt von maximal 1 mm, weiter bevorzugt von maximal 0,5 mm, aufweist.

Die minimale Linienstärke ist durch das Auflösungsvermögen und Wahrnehmungsvermögen des menschlichen Auges bestimmt. Durch eine mögliche Hinterleuchtung oder in Durchlicht sind auch extrem feine Linien noch erkennbar.

Vorteilhafterweise wird und/oder ist in Schritt c) die zumindest eine Lackschicht in Kontakt mit der zumindest einen Folie, insbesondere der Dekorschicht, stehend und/oder auf der der Folie, insbesondere der Dekorschicht, abgewandten Seite des Substrats angeordnet. Beispielsweise kann die zumindest eine Lackschicht in dem Bereich der Folie, insbesondere Dekorschicht, angeordnet sein, in dem in Schritt b) diese, durch Bestrahlen mittels Laser entfernt, insbesondere vollständig entfernt, wurde.

Es ist möglich, dass im zumindest einen zweiten Bereich, insbesondere wenn im zumindest einen zweiten Bereich zumindest eine der Schichten der Dekorschicht entfernt wird und/oder zumindest eine der Schichten der Dekorschicht, bevorzugt zumindest eine Farblackschicht, nicht entfernt, vorzugsweise nicht vollständig entfernt wird, die Lackschicht zumindest eine der Schichten der Dekorschicht, bevorzugt zumindest eine Farblackschicht, teilflächig oder vollflächig überlappt.

Mit anderen Worten kann die zumindest eine Lackschicht oberhalb und/oder unterhalb des Substrats, bevorzugt auf einer der Oberflächen des Substrats, angeordnet werden.

Ein Anordnen der zumindest einen Lackschicht oberhalb des Substrats hat insbesondere den Vorteil, dass die optischen Eigenschaften des Lacks besonders brillant erscheinen können. Ein Anordnen der zumindest einen Lackschicht unterhalb des Substrats ermöglicht es beispielsweise, mehrere nebeneinanderliegende zweite Bereiche einfacher zu bedrucken im Vergleich zu einem Anordnen der zumindest einen Lackschicht oberhalb des Substrats. Das heißt, es müssen hierbei lediglich niedrigere Toleranzen eingehalten werden, da die zweiten Bereiche bei einer Betrachtung auf die vom Substrat aufgespannte Ebene wie optische Masken wirken und die sichtbaren Kanten der zumindest einen Lackschicht maskieren, d.h. optisch verdecken. Dadurch kann auch die Ausschussmenge reduziert werden.

Vorzugsweise weist die zumindest eine Lackschicht Komponenten auf, die durch Beaufschlagung mit thermischer und/oder energiereicher Strahlung, bevorzugt UV-Strahlung, insbesondere mit einer Wellenlänge im Bereich von 200 nm bis 280 nm, aushärtbar sind. Zweckmäßigerweise ist die zumindest eine Lackschicht aus Komponenten, insbesondere Bindemitteln, einzeln oder in Kombination aufweist, ausgewählt aus: Polyethylenterephthalat (PET), Polymethylmethacrylate, Polyester, Polyacrylate, Polycarbonate, Polyethylennaphthalat (PEN), Polyamide, Acrylnitril-Butadien-Styrol-Copolymerisat (ABS), Phenole, Isocyanatgruppen-haltige Polymere, Epoxidgruppen-haltige Polymere, Melamin-haltige Polymere, Hydroxylgruppen-haltige Polymere.

Auch ist es möglich, dass die zumindest eine Lackschicht eingefärbt ist, insbesondere dass die zumindest eine Lackschicht mittels Farbstoffen und/oder Farbpigmenten eingefärbt ist. Vorzugsweise beträgt der Pigmentierungsgrad der zumindest einen Lackschicht weniger als 15 %, bevorzugt weniger als 10 %, weiter bevorzugt weniger als 5 %. Hierdurch wird es insbesondere ermöglicht, dass die zumindest eine Lackschicht in Verbindung mit unterhalb der Lackschicht angeordneten Hinterleuchtungsmitteln einen speziellen optischen Eindruck, wie beispielsweise einen farbigen transluzenten Eindruck bei Verwendung einer Weißlichtquelle als Hinterleuchtungsmittel, erzeugt.

Es ist jedoch auch möglich, dass die zumindest eine Lackschicht farblos ist und/oder klar transparent ist und/oder dass der Pigmentierungsgrad der Lackschicht 0 % beträgt. Hierbei wird beispielsweise der sich ergebende farbige Eindruck von einem unterhalb der Lackschicht angeordneten Hinterleuchtungsmittel und dessen Lichtfarbe bestimmt.

Vorteilhafterweise ist der zumindest eine zweite Bereich und/oder die zumindest eine Lackschicht transparent ausgebildet und/oder der zumindest eine zweite Bereich und/oder die zumindest eine Lackschicht weisen eine Transmission, insbesondere im Wellenlängenbereich von 380 nm bis 780 nm, von mindestens 5 %, bevorzugt von mindestens 25 %, weiter bevorzugt von mindestens 75 %, auf.

In zumindest einem zweiten Bereich kann die zumindest eine Lackschicht einschichtig angeordnet sein. Weiter ist es möglich, dass die zumindest eine Lackschicht aus zwei oder mehreren Teilschichten ausgebildet wird, insbesondere wobei die Teilschichten die gleichen chemischen und physikalischen Eigenschaften aufweisen. Insbesondere durch das Anordnen von Teilschichten kann die Qualität des Auftrags bei Untergründen verbessert werden, die beispielsweise keine homogene Struktur und/oder sonstige Beschaffenheit aufweisen.

Weiter ist es möglich, dass die zumindest eine Lackschicht mehrschichtig angeordnet wird und/oder ist, insbesondere dass die zumindest eine Lackschicht aus zwei oder mehreren Teilschichten ausgebildet wird und/oder ist, wobei die zwei oder mehreren Teilschichten bevorzugt jeweils mit einer Schichtdicke im Bereich von 0,1 μm bis 50 μm, weiter bevorzugt von 0,5 μm bis 5,0 μm, angeordnet werden.

Weiter ist es sinnvoll, wenn die zwei oder mehreren Teilschichten unterschiedliche Farben, insbesondere aus dem RGB-Farbraum oder dem CMYK-Farbraum, aufweisen.

Unter Farbe oder Farbigkeit oder Einzelfarbe oder Einzelfarbigkeit wird ein Farbort in einem Farbraum verstanden. Der Farbraum kann insbesondere der CIELAB-Farbraum sein. Der Farbraum kann auch der RGB-Farbraum (R = Rot; G = Grün; B = Blau) oder der CMYK-Farbraum (C = Cyan; M = Magenta; Y = Gelb; K = Schwarz) oder Farbräume wie RAL, HKS oder der Pantone®-Farbraum sein.

Unter einer unterschiedlichen oder einer sich unterscheidenden Farbigkeit wird ein Farbabstand dE zweier Farborte in einem Farbraum verstanden. Der Farbraum kann insbesondere der CIELAB-Farbraum sein. Eine ausreichend gut für das menschliche Auge wahrnehmbare unterschiedliche Farbigkeit weist einen Farbabstand dE im CIELAB-Farbraum von mindestens 2, bevorzugt von mindestens 3, besonders bevorzugt von mindestens 5, weiter bevorzugt. von mindestens 10, auf.

Der Farbort, insbesondere im CIELAB-Farbraum wird üblicherweise mit einem Farbmessgerät, beispielsweise mit einem Spektralphotometer "Datacolor 650", bestimmt.

Der Wert von dE (oder auch Delta E oder ΔE) zwischen den Farborten $(L^*,a^*,b^*)_p$ und $(L^*,a^*,b^*)_v$ wird als euklidischer Abstand berechnet:

$$dE_{p,v} = \sqrt{(L_p^* - L_v^*)^2 + (a_p^* - a_v^*)^2 + (b_p^* - b_v^*)^2}$$

Dabei steht der Helligkeitswert L* senkrecht auf der Farbebene (a*,b*). Die a-Koordinate gibt die Farbart und Farbintensität zwischen Grün und Rot an und die b-Koordinate die Farbart und die Farbintensität zwischen Blau und Gelb. Je größer positive a- und b- Werte und je kleiner negative a- und b-Werte, umso intensiver der Farbton. Falls a=0 und b=0, liegt ein unbunter Farbton auf der Helligkeitsachse vor. Üblicherweise kann L* Werte zwischen 0 und 100 annehmen und a und b können zwischen -128 und +127 variieren.

Weiter ist es denkbar, dass eine der Farben der Teilschichten der zumindest einen Lackschicht bereichsweise angeordnet wird und/oder ist, insbesondere dass eine der Farben in zumindest einem ersten Teilbereich vorhanden ist und in zumindest einem zweiten Teilbereich nicht vorhanden ist und/oder dass die Teilschichten in einem Raster, insbesondere ausgewählt aus: frequenzmoduliertes Raster, amplitudenmoduliertes Raster, zufälliges Raster, pseudozufälliges Raster, angeordnet werden und/oder sind.

Es ist auch möglich, dass in Schritt c) in zumindest einem der zweiten Bereiche zumindest zwei sich unterscheidende Lackschichten angeordnet werden, wobei sich die zumindest zwei Lackschichten insbesondere in ihren optischen Eigenschaften, wie beispielsweise Farbe und/oder optische Dichte und/oder Transmission, unterscheiden.

Vorstehende Ausgestaltungen bieten den Vorteil, dass bei einer möglichen Hinterleuchtung des Kunststoffartikels einfarbige, aber auch mehrfarbige Muster und/oder Motive mit lediglich einem Hinterleuchtungsmittel erzeugt werden können.

Es ist aber auch möglich, dass in zumindest einem der zweiten Bereiche keine Lackschicht angeordnet wird und/oder ist. Das Substrat bildet damit bevorzugt in diesem Bereich die dem Betrachter zugewandte Schicht aus. Hierbei sind beispielsweise bei Hinterleuchtung des Kunststoffartikels die optischen Eigenschaften des Substrats und/oder eines Hinterleuchtungsmittels sichtbar.

Es ist weiter möglich, dass die optische Dichte eines zumindest zweiten Bereichs und/oder zumindest einer Lackschicht, insbesondere bei einer vollständig mit einem einzelnen Farbton bedeckten Fläche, und/oder eines Teilbereichs zumindest eines zweiten Bereichs, ausgewählt ist aus einem Bereich von 0,5 bis 3, vorzugsweise von 0,8 bis 2,5, aufweisen.

Die Werte der optischen Dichte (OD) werden beispielsweise mit einem Densitometer "Bezeichnung" der [X-Rite GmbH], [82152 Planegg-Martinsried], Deutschland, gemessen. Bei der Messung der optischen Dichte wird ein genau definierter gerichteter weißer Lichtstrahl beispielsweise auf die Oberfläche einer auf einem Substrat angeordneten farbigen Lackschicht gerichtet. Der Messlichtstrahl durchdringt die farbige Lackschicht und wird an der Grenzfläche zwischen farbiger Lackschicht und Substrat reflektiert. Das reflektierte Licht durchdringt die farbige Lackschicht nochmals und wird von einem Photoelement erfasst, wobei ein zur Lichtstärke proportionales elektrisches Signal erzeugt wird. Beim zweifachen Durchdringen der farbigen Lackschicht wird das bevorzugt ursprünglich weiße Messlicht insbesondere durch Absorption gefärbt und abgeschwächt. Dies ergibt den Remissionswert (R), welcher bevorzugt durch einen Standard vorteilhafterweise auf R = 1 (= 100 %) kalibriert wird. Der höchste erzielbare Remissionswert ist damit vorzugsweise R = 1. Der gemessene Remissionswert beträgt daher bevorzugt einen Wert aus einem Bereich von 0 bis 1, wobei die Remissionswerte insbesondere einheitenlose Werte darstellen.

Der Wert der optischen Dichte (OD) kann anschließend nach der folgenden Gleichung aus dem Remissionswert (R) berechnet werden: $OD = \lg(1/R)$

Nach vorstehender Gleichung ergeben hohe Remissionswerte niedrige Werte optischer Dichte und umgekehrt. Die optische Dichte des Substrats mit einem bevorzugten Remissionswert mit R = 1 beträgt vorzugsweise OD = 0.Mit der Zunahme der aufgebrachten Farbmenge, bevorzugt Schichtdicke oder Pigmentierungsgrad, sinkt die Remission und die optische Dichte steigt an.

Insbesondere kann anstatt der Remission auch die Transmission einer farbigen Lackschicht herangezogen werden, um die optische Dichte zu berechnen. Der funktionale Zusammenhang zwischen Transmission (T) in Prozent (%) und optischer Dichte (OD) formuliert sich dabei wie folgt: $OD = \lg(100/T[\%])$.

Die zumindest eine Lackschicht kann im Wesentlichen nur im zumindest zweiten Bereich und nicht im zumindest einen ersten Bereich angeordnet werden und/oder sein. Alternativ ist es auch möglich, dass die zumindest in einem der zweiten Bereiche angeordnete zumindest eine Lackschicht in Schritt c) mit dem zumindest einen ersten Bereich bereichsweise überlappend angeordnet wird oder ist, insbesondere wenn die zumindest eine Lackschicht in Betrachtung auf die Sichtfläche des Kunststoffartikels unterhalb des Substrats oder unterhalb der einem Betrachter abgewandten Seite des Substrats und/oder der Folie, insbesondere der Dekorschicht, angeordnet ist.

Mit anderen Worten kann die zumindest eine Lackschicht, insbesondere in den mit den Randbereichen des zumindest einen zweiten Bereichs in Kontakt stehenden ersten Bereichen, angeordnet werden und/oder sein, wobei in jeder der bedruckten Fläche bevorzugt im Zentrum zumindest ein zweiter Bereich angeordnet ist.

Die ist insbesondere hilfreich, wenn mehrere zweite Bereiche nah nebeneinanderliegen, so dass durch ein flächiges Anordnen der zumindest einen Lackschicht über die zweiten Bereiche hinweg das Anordnen der Lackschicht beschleunigt werden kann. Weiter vorteilhaft ist, dass bei einer derartigen Aufbringung der Lackschicht geringere Toleranzen eingehalten werden müssen. Dies, da der mit dem Laser in die zumindest eine Folie, insbesondere Dekorschicht, eingebrachte zweite Bereich hierbei wie eine Maske wirkt.

Auch ist es möglich, dass in dem zumindest einen zweiten Bereich eine Grundierung angeordnet wird und/oder ist, bevor die zumindest eine Lackschicht angeordnet wird. Insbesondere ist die Grundierung zwischen dem Substrat und/oder der zumindest einen Folie, insbesondere der Dekorschicht, und der zumindest einen Lackschicht angeordnet.

Bevorzugt weist die Grundierung eine Transmission, insbesondere im Wellenlängenbereich von 380 nm bis 780 nm, von mindestens 10 %, bevorzugt von mindestens 25 %, weiter bevorzugt von mindestens 75 %, noch weiter bevorzugt von mindestens 90 %, auf. Auch ist es möglich, dass die Grundierung eingefärbt ist, bevorzugt weiß eingefärbt ist, insbesondere dass die Grundierung mittels Farbstoffen und/oder Farbpigmenten eingefärbt ist. Vorzugsweise beträgt der Pigmentierungsgrad der Grundierung weniger als 15 %, bevorzugt weniger als 10 %, weiter bevorzugt weniger als 5 %.

Es ist jedoch auch möglich, dass die Grundierung farblos ist und/oder klar transparent ist und/oder dass der Pigmentierungsgrad der Grundierung 0 % beträgt.

Bevorzugt wird die Grundierung mit einer Schichtdicke ausgewählt aus dem Bereich von 0,1 $\mu$m bis 10 $\mu$m, bevorzugt von 0,3 $\mu$m bis 5 $\mu$m, angeordnet oder weist diese Schichtdicke auf.

Durch eine Grundierung wird die Haftung der zumindest einen Lackschicht zum bedruckenden Untergrund verbessert und/oder Unebenheiten ausgeglichen und/oder Farbqualität und Farbbrillanz der zumindest einen Lackschicht verbessert.

Es ist möglich, dass die zumindest eine Lackschicht registergenau und/oder passergenau angeordnet wird.

Unter Register oder Passer, bzw. Registergenauigkeit oder Passergenauigkeit ist eine Lagegenauigkeit zweier oder mehrerer Elemente, Folien, Ebenen, Bereiche und/oder Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen, Folien, Ebenen, Bereiche und/oder Schichten zueinander ein wichtiges Merkmal, um die Prozesssicherheit zu erhöhen.

Die lagegenaue Positionierung kann dabei insbesondere mittels sensorischer, vorzugsweise optisch detektierbarer Passermarken oder Registermarken, optischen Sensoreinheiten, bevorzugt Kameras, Schablonen, Masken und/oder mechanischen Anschlägen erfolgen. Insbesondere können Passermarken oder Registermarken dabei entweder spezielle separate Elemente oder Bereiche oder Schichten darstellen oder selbst Teil der zu positionierenden Elemente oder Bereiche oder Schichten sein.

Die zumindest eine Lackschicht, die derart angeordnet wird, dass sie auf der dem Betrachter zugewandten Seite des Kunststoffartikels oberhalb des Substrats angeordnet ist und/oder mit der zumindest einen Dekorschicht zumindest teilweise in Kontakt steht, wird bevorzugt mit einer Toleranz zu einer Sollposition von höchstens $\pm 0,7$ mm, vorzugsweise von höchstens $\pm 0,5$ mm, weiter bevorzugt von höchstens $\pm 0,3$ mm, angeordnet oder weist vorstehende Toleranz zu einer Sollposition auf. Die zumindest eine Lackschicht, die auf der der zumindest einen Dekorschicht abgewandten Seite des Substrats angeordnet ist, wird bevorzugt mit einer Toleranz zu einer Sollposition von höchstens $\pm 5$ mm, vorzugsweise von höchstens $\pm 1$ mm, weiter bevorzugt von höchstens $\pm 0,5$ mm angeordnet und/oder weist vorstehende Toleranz zu einer Sollposition auf.

Es ist möglich, dass die zumindest eine Lackschicht in Schritt c) inline und/oder nachgeschaltet angeordnet wird. Mit anderen Worten können die Verfahrensschritte direkt hintereinander durchgeführt werden und/oder das Anordnen der zumindest einen Lackschicht erfolgt erst nachdem die zumindest eine Folie, insbesondere die Dekorschicht, beispielsweise zwischengelagert, transportiert und/oder aus der für das Verfahren vorgesehenen Vorrichtung entnommen wurde.

Vorteilhafterweise wird zur Durchführung des Verfahrens zur Anordnung der zumindest einen Lackschicht ein Lack verwendet, der eine Oberflächenenergie während des Schritts c) bevorzugt ausgewählt aus einem Bereich von 15 mN/m bis 45 mN/m, bevorzugt von 20 mN/m bis 35 mN/m aufweist.

Weiter ist es von Vorteil, wenn die Oberflächenenergie der zumindest einen Folie, insbesondere der Dekorschicht, und/oder des Substrats während des Schritts c) ausgewählt wird aus einem Bereich von 30 mN/m bis 50 mN/m, bevorzugt von 30 mN/m bis 45 mN/m.

Bevorzugt beträgt in Schritt c) die Differenz zwischen der Oberflächenspannung des Lacks der zumindest einen Lackschicht und der zumindest einen Folie, insbesondere der Dekorschicht, und/oder dem Substrat mindestens einen Wert ausgewählt aus einem Bereich von $\pm 5$ mN/m bis $\pm 100$ mN/m, bevorzugt von $\pm 10$ mN/m bis $\pm 70$ mN/m und maximal einen Wert ausgewählt aus einem Bereich von $\pm 15$ mN/m bis $\pm 50$ mN/m, bevorzugt von $\pm 20$ mN/m bis $\pm 35$ mN/m.

Bevorzugt weist die zumindest eine Folie, insbesondere die Dekorschicht, und/oder das Substrat während Schritt c) eine größere Oberflächenenergie im Vergleich zum aufzutragenden Lack der zumindest einen Lackschicht auf.

Unter Oberflächenenergie wird die Energie verstanden, die zum Aufbrechen der molekularen Bindungen der Oberflächen von Flüssigkeiten und/oder Festkörpern mindestens aufgewendet werden muss. Mit anderen Worten ist die Oberflächenenergie die Kraft, die erforderlich ist, um die Oberfläche einer Flüssigkeit und/oder eines Festkörpers zu vergrößern.

Weist der Lack, die zumindest eine Folie, und/oder das Substrat die vorstehenden Werte an Oberflächenenergie auf, so kann sichergestellt werden, dass der Lack die zumindest eine Folie und/oder das Substrat einerseits ausreichend benetzt, aber andererseits die Tropfen des Lacks nicht vollständig verfließen oder sogar spreiten. Die Tropfen des Lacks haften also mit definierter Geometrie auf der bedruckten Oberfläche ohne zu verlaufen. Hiermit lässt sich ein besonders hoher Detailgrat beim Drucken ermöglichen.

Bevorzugt wird in dem zumindest einen zweiten Bereich die zumindest eine Lackschicht mit einer Schichtdicke ausgewählt aus einem Bereich von 2 $\mu$m bis 36 $\mu$m, bevorzugt von 4 $\mu$m bis 18 $\mu$m, bevorzugt von 5 $\mu$m bis 12 $\mu$m, angeordnet.

Bevorzugt ist das Substrat einschichtig oder mehrschichtig aus thermoplastischen Materialien, einzeln oder in Kombination ausgewählt aus PC, PET, PMMA, PEN, PA, ABS ausgebildet. Durch die thermoplastische Natur der genannten Materialien ist eine problemlose Umformung möglich.

Vorteilhafterweise ist das Substrat transparent oder semitransparent ausgebildet und/oder das Substrat weist eine Transmission, insbesondere im Wellenlängenbereich von 380 nm bis 780 nm, von mindestens 10 %, bevorzugt von mindestens 25 %, weiter bevorzugt von mindestens 75 %, noch weiter bevorzugt von mindestens 90 %, auf.

Hierdurch ist das Substrat durchleuchtbar, insbesondere mittels eines Hinterleuchtungsmittels durchleuchtbar und/oder die zumindest eine Folie, insbesondere die Dekorschicht, ist, wenn sie in Betrachtungsrichtung unterhalb des Substrats angebracht ist sichtbar.

Auch ist die vorstehende Ausgestaltung des Substrats vorteilhaft, wenn die zumindest eine Folie, insbesondere die Dekorschicht, auf der dem Betrachter abgewandten Seite des Substrats angeordnet ist und/oder wird, da hierbei die Dekorschicht einerseits geschützt ist vor äußeren insbesondere chemischen und/oder physikalischen Belastungen und andererseits noch vom Betrachter wahrgenommen wird.

Bevorzugt weist das Substrat eine Schichtdicke ausgewählt aus einem Bereich von 0,25 mm bis 20 mm, insbesondere von 1 mm bis 5 mm auf. Damit wird die Herstellung eines dünnen und gegebenenfalls flexiblen Kunststoffartikels sichergestellt.

Vorteilhafterweise ist der während des Verfahrens in Schritt b) verwendete und/oder der in der Vorrichtung vorhandene zumindest eine Laser bevorzugt ausgewählt aus: Festkörperlaser, bevorzugt Faserlaser, YAG-Laser, UV-Laser, Rubinlaser und/oder Saphirlaser, Diodenlaser, Gaslaser und/oder Farbstofflaser.

Auch vorteilhaft ist, dass der zumindest eine Laser bevorzugt kohärentes Licht aus dem Infrarotbereich, insbesondere aus dem nahen Infrarotbereich, weiter bevorzugt aus dem Wellenlängenbereich von 200 nm bis 1400 nm, bevorzugt von 780 nm bis 1200 nm, weiter bevorzugt Licht der Wellenlänge 1064 nm, emittiert. Alternativ kann auch ein Laser verwendet werden, der insbesondere Licht aus dem UV-Bereich, weiter bevorzugt mit einer Wellenlänge von 340 nm bis 400 nm, weiter bevorzugt Licht der Wellenlänge 355 nm, emittiert. Weiter kann der Laser kontinuierlich oder gepulst betrieben werden.

Es ist weiter auch möglich, dass in dem Schritt b) der zumindest eine Laser mit einem Strahldurchmesser im Fokuspunkt von mindestens 30 $\mu$m, bevorzugt mindestens 50 $\mu$m, bevorzugt mindestens 100 $\mu$m, verwendet wird.

Auch ist es möglich, den Laserstrahl mittels zumindest einer Linse, insbesondere mit einer Brennweite in einem Bereich von 100 mm bis 500 mm, bevorzugt von 150 mm bis 300 mm, weiter bevorzugt von 163 mm oder 254 mm, zu fokussieren.

Es ist zweckmäßig, wenn in dem Schritt b) der Laserstrahl mittels auslenkbarer Spiegel, insbesondere mittels eines Laser-Scan-Moduls, entlang des zumindest einen zweiten Bereichs gelenkt wird.

Der Laserstrahl kann insbesondere mit einer Toleranz zu einer Sollposition von höchstens ±0,5 mm, vorzugsweise von höchstens ±0,3 mm, weiter bevorzugt von höchstens ±0,1 mm, gesteuert werden oder der so mittels Laser erzeugte zweite Bereich weist eine Toleranz zu einer Sollposition von höchstens ±0,5 mm, vorzugsweise von höchstens ±0,3 mm, weiter bevorzugt von höchstens ±0,1 mm auf.

Bevorzugt weist der zumindest eine Laser eine Leistung ausgewählt aus einem Bereich von 0,05 W bis 100 W, bevorzugt von 1 W bis 50 W, weiter bevorzugt von 5 W bis 20 W, auf. Insbesondere wird der zumindest eine Laser mit einer Schreibgeschwindigkeit von maximal 10.000 mm/s, bevorzugt mit einer Schreibgeschwindigkeit ausgewählt aus einem Bereich von 500 m/s bis 2500 mm/s, betrieben.

Weiter wird der zumindest eine Laser insbesondere mit einer Pulsfrequenz ausgewählt aus einem Bereich von 1 Hz bis 1000 kHz, bevorzugt von 25 kHz und 400 kHz, betrieben und/oder der zumindest eine Laser wird mit bis zu 3000 Zeichen/s, bevorzugt ausgewählt aus einem Bereich von 800 Zeichen/s bis 1500 Zeichen/s, betrieben. Die benötigte Intensität des Laserstrahls richtet sich nach der Art und Dicke der zumindest einen Folie, insbesondere der Dekorschicht, sowie auch der Geschwindigkeit, mit der die zumindest eine Folie, insbesondere die Dekorschicht, entfernt werden soll.

Auch ist es möglich, dass die zumindest eine Folie, insbesondere die Dekorschicht, überdruckbar ist und dass das Verfahren weiter folgenden Schritt umfasst, insbesondere der vor Schritt d) und/oder vor und/oder nach Schritt c) durchgeführt wird:

g) Bedrucken der zumindest einen Folie, insbesondere der Dekorschicht, mittels Digitaldruck, insbesondere mit einer Grundierung und/oder mit zumindest einer Lackschicht, bevorzugt umfassend einen Haptiklack, wobei zumindest ein dritter Bereich ausgebildet wird und wobei der zumindest eine dritte Bereich sich nicht mit dem zumindest einen zweiten Bereich überlappt.

Hierdurch können die Gestaltungsmöglichkeiten eines mit diesem Verfahren gefertigten Produkts noch weiter erhöht werden.

Bevorzugt kann für Ausgestaltung des zumindest einen dritten Bereichs auf die aufgeführten Ausgestaltungvarianten des zumindest einen zweiten Bereichs zurückgegriffen werden, insbesondere hinsichtlich der Druckverfahren und/oder Druckparametern und/oder Druckvorrichtung.

Alternativ oder zusätzlich kann der zumindest eine dritte Bereich opak ausgebildet sein und/oder eine Remission, insbesondere im Wellenlängenbereich von 380 nm bis 780 nm, von maximal 0,5, bevorzugt von maximal 0,2, weiter bevorzugt von maximal 0,05, aufweisen.

Beispielsweise bietet sich bei Verwendung desselben Druckkopfes der Vorteil, dass Schritt g) inline und ohne zusätzliche Kosten für zusätzliche Druckvorrichtungen durchgeführt werden kann. Alternativ kann Schritt g) auch nachgeschaltet durchgeführt werden. Insbesondere ist es vorteilhaft, den zumindest einen dritten Bereich dort anzuordnen, wo keine Hinterleuchtungsmittel angebracht werden. Bevorzugt überlappen sich der zumindest eine erste Bereich und der zumindest eine dritte Bereich zumindest bereichsweise und/oder vollständig.

Bevorzugt wird in Schritt c) und/oder Schritt g) eines der folgenden Digitaldruckverfahren verwendet, insbesondere zum Anordnen der zumindest einen Lackschicht: Inkjet, insbesondere Continuous Ink Jet und/oder Piezo-elektrischer Inkjet und/oder thermoelektrischer Inkjet (Bubble-Jet), und/oder Thermodruck.

Bevorzugt wird in Schritt c) und/oder Schritt g) die Größe eines einzelnen Tropfens beim Aufbringen der zumindest einen Lackschicht mittels Drucken ausgewählt aus einem Bereich von 2 pl bis 50 pl, bevorzugt von 2,5 pl bis 30 pl, ist. Weiter ist es auch möglich, dass 2 bis 10 Tropfen, bevorzugt 3 bis 7 Tropfen, beim Anordnen kombiniert werden.

Auch ist bevorzugt, dass die dynamische Viskosität des Lacks der zumindest einen Lackschicht während des Druckvorgangs ausgewählt wird aus einem Bereich von 3 mPas bis 100 mPas, vorzugsweise von 4 mPas bis 80 mPas, vorzugsweise von 5 mPas bis 50 mPas.

Die Auflösung des Druckkopfs beträgt bevorzugt zwischen 300 npi und 1200 npi (Auftragsdüsen pro Zoll, npi = nozzles per inch). Dadurch wird die Auflösung des Drucks quer zu einer Vorschubrichtung des Substrats und/oder des Druckkopfes bestimmt. Die Auflösung entlang der Vorschubrichtung des Substrats und/oder des Druckkopfes wird durch die Genauigkeit dieses Vorschubs durch entsprechend genau gesteuerte Antriebe bestimmt und beträgt vorzugsweise zwischen 300 dpi und 4800 dpi.

Weiter ist es möglich, dass das Verfahren weiter folgenden Schritt umfasst, insbesondere der vor Schritt c) und/oder Schritt g) durchgeführt wird:

h) Vorbehandlung der Oberfläche des Substrats und/oder der zumindest einen Folie, insbesondere der Dekorschicht, insbesondere mittels eines oder mehrerer der folgenden Verfahren: Coronabehandlung, Beflammung, Reinigung, Plasmabehandlung.

Hierbei wird eine bessere Haftung der zumindest einen Folie, insbesondere der Dekorschicht, oder der zumindest einen Lackschicht auf dem Substrat erreicht und eine höhere Fertigungsqualität ermöglicht.

Auch ist es möglich, dass das Verfahren den folgenden weiteren Schritt umfasst, der insbesondere vor und/oder nach Schritt b) und/oder Schritt c) durchgeführt wird:

i) Umformen der zumindest einen Folie, insbesondere der Dekorschicht, und/oder des Substrats, bevorzugt mittels Vakuum oder Hochdruck oder Tiefziehwerkzeugen.

Hierbei können insbesondere übliche Tiefziehverfahren angewendet werden. In der Regel wird die zumindest eine Folie, insbesondere Dekorschicht, und/oder das Substrat als Bogenware bereitgestellt und in ein Tiefziehwerkzeug eingelegt, welches die gewünschte Endkontur aufweist. Durch die Applikation von Wärme, bevorzugt einer Temperatur von 80°C bis 200°C, wird die zumindest eine Folie, insbesondere Dekorschicht, und/oder das Substrat verformbar gemacht. Nun kann die zumindest eine Folie, insbesondere Dekorschicht, und/oder das Substrat durch Anlegen von Vakuum und/oder durch Applikation eines Formstempels und/oder Luftüberdruck an die Form des Tiefziehwerkzeuges angepasst und damit in die gewünschte Endkontur gebracht werden. Beim Abkühlen härtet das Material der Folie, insbesondere Dekorschicht, und/oder das Substrat dann wieder aus, so dass diese die Endkontur beibehalten.

Nach dem Tiefziehen kann gegebenenfalls noch eine mechanische Nachbearbeitung erfolgen, beispielsweise durch Beschneiden, bevorzugt mechanisch oder mittels Laser, Fräsen, Stanzen oder dergleichen.

Insbesondere wird in Schritt d) die Lackschicht und/oder die zumindest eine Folie, insbesondere die Dekorschicht, thermisch und/oder durch energiereiche Strahlung, bevorzugt UV-Strahlung, ausgehärtet. Insbesondere erfolgt die Härtung vor und/oder nach der Anordnung der zumindest einen Folie, insbesondere der Dekorschicht, auf dem Substrat. Bevorzugt weist die Vorrichtung hierzu zumindest eine UV-Lampe, insbesondere eine Quecksilberdampflampe und/oder UV-LED-Lampe, und/oder zumindest ein IR-Heizelement auf.

Bevorzugt erfolgt das Aushärten in Schritt d) mittels UV-Strahlung mit einer Strahlendosis ausgewählt aus dem Bereich von 800 mJ/cm$^2$ bis 1200 mJ/cm$^2$ und/oder einer Intensität von mindestens 550 mW/cm$^2$ und/oder bei einer Wellenlänge im Bereich von 200 nm bis 280 nm. Insbesondere weist die zumindest eine Folie, insbesondere die Dekorschicht, und/oder das Substrat nach Schritt d) eine andere Oberflächenenergie als sie während Schritt c) aufweisen.

Natürlich ist es abhängig vom Verwendungsgebiet des Kunststoffartikels insbesondere denkbar, diesen in einem weiteren Verfahrensschritt oder einem weiteren Verfahren in eine Spritzgussform einzulegen und mit einer Kunststoffspritzmasse zu hinterspritzen. Weiter ist es möglich, davor und/oder danach zumindest ein Funktionselement, insbesondere eine Hinterleuchtungsvorrichtung, insbesondere umfassend organische Leuchtdioden (OLED), anorganische Leuchtdioden (LED), MikroLEDs (mLED) und/oder Quantenpunkt-Leuchtdioden (QLED), und/oder einen berührungssensitiven Sensor (Touchsensor) und/oder weitere funktionelle Komponenten wie beispielsweise eine Steuerungselektronik und/oder mechanische und/oder elektrisch leitende Verbindungskomponenten und/oder elektromagnetische Abschirmungen und/oder thermische Abschirmungen und/oder optische Abschirmungen, anzubringen. Das Funktionselement kann mit dem Kunststoffartikel fest verbunden sein, insbesondere durch Kleben oder Laminieren. Das Funktionselement wird vorzugweise auf der dem Betrachter abgewandte Seite des Kunststoffartikels angebracht. Weiter kann das Funktionselement zusätzlich oder alternativ elektrische Leitungen und/oder elektrische/elektronische Bauelemente aufweisen.

Der Kunststoffartikel ist insbesondere durchleuchtbar und wird insbesondere mit einem Display und/oder mit einem Touchfeld und/oder mit einem Panel verwendet. Insbesondere eignet sich besonders gut einer der folgenden Bereiche für die Verwendung des Kunststoffartikels: Weiße Ware, Kraftfahrzeuge, Luftfahrt, Schiffe, Haushaltsgeräte, Telekommunikationsgeräte, Konsumgüter, und/oder Elektronikartikel.

Für die Vorrichtung kann es vorteilhaft sein, wenn diese weiter noch Vorratsrollen zum Bereitstellen der zumindest einen Folie, insbesondere der Dekorschicht, und/oder des Substrats, Fördereinrichtungen für die zumindest eine Folie, insbesondere die Dekorschicht, und/oder des Substrats, eine Walzenanordnung zum Anordnen von beispielsweise Haftvermittlern, eine Abzieheinheit zum Abziehen einer Trägerfolie von zumindest einem Teilbereich der Transferlage, eine Umformvorrichtung, eine Vorrichtung zur Vorbehandlung der Oberfläche des Substrats und/oder der Folie, insbesondere der Dekorschicht, eine Vorrichtung zur mechanische Nachbearbeitung des Kunststoffartikels und dergleichen aufweist, was insbesondere zur Durchführung des vorstehend beschriebenen Verfahrens notwendig ist.

Selbstverständlich können auch obig angeführte Sachmerkmale äquivalent in einem Verfahren oder angeführte Verfahrensmerkmale im Produkt angewendet werden.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht als einschränkend zu verstehen.

Fig. 1    zeigt eine schematische Schnittdarstellung eines Kunststoffartikels.

Fig. 2    zeigt eine schematische Schnittdarstellung eines Kunststoffartikels.

Fig. 3    zeigt eine schematische Schnittdarstellung eines Kunststoffartikels.

Fig. 4    zeigt eine schematische Schnittdarstellung eines Kunststoffartikels.

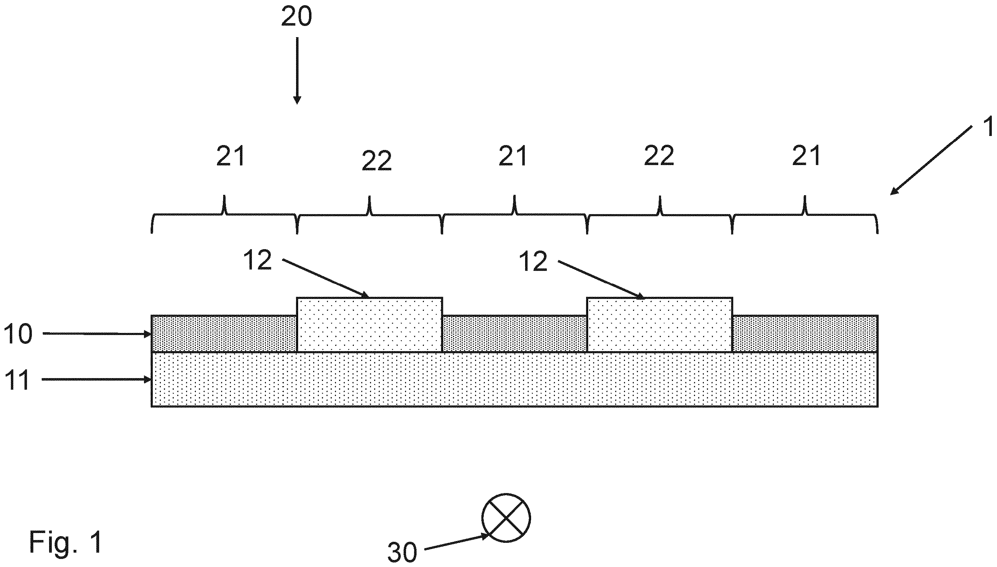

Figur 1 zeigt eine schematische Schnittdarstellung eines Kunststoffartikels 1. Der Kunststoffartikel 1 umfasst zumindest eine Folie 10, insbesondere eine Dekorschicht, und ein Substrat 11, und weist zumindest einen ersten Bereich 21 und zumindest einen zweiten Bereich 22 auf. In Betrachtungsrichtung 20 eines Beobachters weist der Kunststoffartikel 1 in dem zumindest einen ersten Bereich 21 die zumindest eine Folie 10, insbesondere Dekorschicht, auf und in dem zumindest einen zweiten Bereich 22 zumindest eine Lackschicht 12. Der zumindest eine zweite Bereich 22 weist eine höhere Transmission als der zumindest eine erste Bereich 21 auf.

Der Kunststoffartikel 1 in Figur 1 umfassend den zumindest einen ersten Bereich 21 und den zumindest einen zweiten Bereich 22 wird durch ein Verfahren erhalten, wobei in einem bevorzugten ersten Schritt des Verfahrens (Schritt a)) eine Folie 10 umfassend eine Trägerfolie und zumindest eine Dekorschicht bereitgestellt wird. In einem Schritt b) wird der zumindest eine erste Bereich 21 und der zumindest eine zweite Bereich 22 mittels Laser in die von der zumindest einen Folie, insbesondere der Dekorschicht, ausgebildeten Ebene eingebracht. Weiter wird in einem Schritt c) zumindest eine Lackschicht 12 in zumindest einen zweiten Bereich mittels Digitaldruck angeordnet. Ein weiterer Schritt, Schritt d), des Herstellungsverfahrens ist das Aushärten, insbesondere das gleichzeitige Aushärten, der zumindest einen Folie 10, insbesondere der Dekorschicht, und/oder der zumindest einen Lackschicht 12. Weiter wird die zumindest eine Folie 10, insbesondere die Dekorschicht, in einem Schritt e) auf dem Substrat angeordnet. Es ist insbesondere möglich das Verfahren in der voranstehenden Reihenfolge oder einer anderen Reihenfolge durchzuführen.

Vorzugsweise wird das Verfahren zur Herstellung des Kunststoffartikels in einer Vorrichtung umfassend zumindest einen Laser und zumindest einen Digitaldruckkopf durchgeführt.

Es hat sich als vorteilhaft erwiesen, dass in Schritt a) die zumindest eine bereitgestellte Folie 11, insbesondere die Dekorschicht, bevorzugt als eine Transferfolie, insbesondere umfassend eine Trägerfolie und eine von der Trägerfolie ablösbare Transferlage, oder Laminierfolie bereitgestellt wird oder als eine derartige Folie ausgestaltet ist. Es ist möglich, dass die Trägerfolie während des Verfahrens abgezogen wird, insbesondere vor, während oder nach Schritt e).

Vorzugsweise ist die zumindest eine Folie 11, insbesondere die Dekorschicht, eine Schicht mit Komponenten, insbesondere Bindemitteln, einzeln oder in Kombination ausgewählt aus: Monomeren, Oligomeren, Polymeren, Copolymeren, bevorzugt umfassend einzeln oder in Kombination ausgewählt aus: Polymethylmethacrylate, Polyester, Polycarbonate, Polyamide, Polyurethane, PVC, Phenole, Isocyanatgruppen-haltige Polymere, Epoxidgruppen-haltige Polymere, Melamin-haltige Polymere, Hydroxylgruppen-haltige Polymere, weiter bevorzugt umfassend Polyurethane und/oder PVC, ist.

Weiter kann es von Vorteil sein, wenn die zumindest eine Folie 11, insbesondere die Dekorschicht, Schichten aufweist, insbesondere zumindest jeweils eine oder mehrere der folgenden Schichten aufweist, jeweils einzeln oder in Kombination ausgewählt aus: zumindest eine Farblackschicht, zumindest eine Metallschicht, zumindest eine Kleberschicht, zumindest eine Haftvermittlerschicht, zumindest eine Barriereschicht, zumindest eine Annahmeschicht, zumindest eine Schutzlackschicht, zumindest eine Ablöseschicht, zumindest eine Replikationsschicht, zumindest eine Laserschutzlackschicht. Es ist weiter vorteilhaft, wenn die zumindest eine Dekorschicht die Transferlage ausbildet und von der Trägerfolie ablösbar ist.

Bevorzugt weist die zumindest eine Folie 11, insbesondere die Dekorschicht, eine Schichtdicke ausgewählt aus einem Bereich von 0,1 $\mu$m bis 50 $\mu$m, bevorzugt von 0,5 $\mu$m bis 35 $\mu$m, bevorzugt von 1 $\mu$m bis 5 $\mu$m, auf.

Weiter kann die zumindest eine Folie 11, insbesondere die Dekorschicht, eine Metallisierung aufweisen, insbesondere mit einer Schichtdicke von 1 nm bis 20 $\mu$m, bevorzugt von 5 nm bis 15 $\mu$m. Bevorzugt ist die Metallisierung aus Metallen und/oder Metallkombinationen und/oder Legierungen ausgebildet, einzeln oder in Kombination ausgewählt aus: Aluminium, Kupfer, Kobalt, Gold, Indium, Eisen, Chrom, Nickel, Silber, Platin, Palladium, Titan.

In dem in Fig. 1 gezeigten Kunststoffartikel 1 wird und/oder ist die zumindest eine Folie 11, insbesondere die Dekorschicht, vollflächig auf dem Substrat 12 angeordnet. Alternativ kann die zumindest eine Folie 11, insbesondere die Dekorschicht, nur bereichsweise angeordnet werden oder sein, wobei insbesondere das Substrat 12 für einen Betrachter sichtbar ist, insbesondere in Blickrichtung auf die der Dekorschicht zugewandten Seite des Substrats 12.

Es ist insbesondere vorteilhaft, wenn die zumindest eine Folie 11, insbesondere die Dekorschicht, opak ausgebildet ist und/oder wenn die zumindest eine Folie 11, insbesondere die Dekorschicht, eine Transmission, insbesondere im Wellenlängenbereich von 380 nm bis 780 nm, von maximal 50 %, bevorzugt von maximal 20 %, weiter bevorzugt von maximal 5 %, aufweist.

Es ist möglich, dass in Schritt e) die zumindest eine Folie 11, insbesondere die Dekorschicht, mit einem Transferlackverfahren, insbesondere einem Heißprägeverfahren, und/oder einem IMD-Verfahren, und/oder mit einem Laminierverfahren, insbesondere einem IML-Verfahren, einem Insert-Molding-Verfahren und/oder einem PMD-Verfahren, angeordnet wird.

Weiter ist in dem in Figur 1 gezeigten Kunststoffartikel 1 die zumindest eine Folie 11, insbesondere die Dekorschicht, derart auf dem Substrat 12 angeordnet wird und/oder ist, dass die Dekorschicht 11 dem Betrachter zugewandt ist.

Bevorzugt wird die zumindest eine Folie 11, insbesondere die Dekorschicht, derart auf dem Substrat 12 angeordnet, dass sie fest mit dem Substrat 12 fest verbunden ist, so dass sich diese nicht mehr mechanisch trennen lassen ohne zumindest eines der Elemente zu beschädigen.

In Schritt b) wird die Folie, insbesondere die Dekorschicht, mittels Laser derart bestrahlt, dass zumindest ein erster und ein zweiter Bereich ausgebildet werden, wobei der zumindest zweite Bereich eine höhere Transmission aufweist. Insbesondere ist es vorteilhaft, wenn in Schritt b) die zumindest eine Folie 11, insbesondere die Dekorschicht, in dem zumindest einen zweiten Bereich 22 entfernt, vorzugsweise vollständig entfernt, wird und/oder ist.

Es ist auch möglich, dass der zumindest eine zweite Bereich 22 derart ausgebildet wird, dass zumindest eine der Schichten der Dekorschicht entfernt wird. Insbesondere ist es möglich, dass der zumindest eine zweite Bereich 22 derart ausgebildet wird, dass zumindest eine der Schichten der Dekorschicht, bevorzugt zumindest eine Farblackschicht, im zumindest einen zweiten Bereich 22 nicht entfernt, vorzugsweise nicht vollständig entfernt, wird. Somit ist es möglich, dass insbesondere nach Schritt b) im zweiten Bereich 22 zumindest eine Farblackschicht angeordnet ist.

Vorteilhafterweise beträgt der Unterschied in der Transmission zwischen dem zumindest einen ersten Bereich 21 und dem zumindest einen zweiten Bereich 22 des Kunststoffartikels 1 bevorzugt zumindest 5 %, vorzugsweise zumindest 10 %, besonders bevorzugt zumindest 25 %, insbesondere im Wellenlängenbereich von 380 nm bis 780 nm. Vorzugsweise weist der zumindest eine zweite Bereich im Kunststoffartikel eine höhere Transmission als der zumindest eine erste Bereich auf.

Insbesondere wird und/oder ist zumindest ein zweiter Bereich 22 in Form von einem Symbol, einer geometrischen Figur, einem Muster, einem alphanumerischen Zeichen und/oder einem Logo ausgestaltet oder umfasst diese. Diese Formen können auch mit abstrakten grafischen Designelementen kombiniert werden. Die Ausgestaltung des zumindest einen zweiten Bereichs 22 kann eine rein verzierende Funktion besitzen, aber vorzugsweise auch funktional sein und beispielsweise Anzeige- oder Bedienungselemente eines Geräts, wie Statusanzeigen, Bedienflächen oder dergleichen markieren.

Es ist weiter bevorzugt, wenn der zumindest eine zweite Bereich 22 bei Betrachtung senkrecht auf die zumindest eine Folie 10, insbesondere Dekorschicht, eine Linienstärke von mindestens 50 $\mu$m, bevorzugt von mindestens 100 $\mu$m, aufweist und/oder wenn der zumindest eine zweite Bereich 22 bei Betrachtung senkrecht auf die zumindest eine Folie 10, insbesondere Dekorschicht, eine Linienstärke von maximal 2 mm, bevorzugt von maximal 1 mm, weiter bevorzugt von maximal 0,5 mm, aufweist.

Vorteilhafterweise wird und/oder ist in Schritt c) die zumindest eine Lackschicht 12 in Kontakt mit der zumindest einen Folie 10, insbesondere der Dekorschicht, stehend und/oder auf der der Folie 10, insbesondere der Dekorschicht, abgewandten Seite des Substrats 11 angeordnet.

Mit anderen Worten ist in dem Kunststoffartikel in Figur 1 die zumindest eine Lackschicht 12 in Betrachtungsrichtung 20 oberhalb des Substrats 11, bevorzugt auf einer der Oberfläche des Substrats 11, angeordnet. Weiter ist die zumindest eine Lackschicht in dem Bereich angeordnet, indem in Schritt b) die zumindest eine Folie, insbesondere die Dekorschicht, durch Bestrahlen mittels Laser entfernt, insbesondere vollständig entfernt, wurde.

Es ist möglich, dass im zumindest einen zweiten Bereich 22, insbesondere wenn im zumindest einen zweiten Bereich 22 zumindest eine der Schichten der Dekorschicht entfernt wird und/oder zumindest eine der Schichten der Dekorschicht, bevorzugt zumindest eine Farblackschicht nicht entfernt, vorzugsweise nicht vollständig entfernt, wird, die Lackschicht 12 zumindest eine der Schichten der Dekorschicht, bevorzugt zumindest eine Farblackschicht, teilflächig oder vollflächig überlappt.

Vorzugsweise weist die zumindest eine Lackschicht 12 Komponenten auf, die durch Beaufschlagung mit thermischer und/oder energiereicher Strahlung, bevorzugt UV-Strahlung, insbesondere mit einer Wellenlänge im Bereich von 200 nm bis 280 nm, aushärtbar sind. Zweckmäßigerweise ist in dem Kunststoffartikel 1 nach Figur 1 die zumindest eine Lackschicht 12 aus Komponenten, insbesondere Bindemitteln, einzeln oder in Kombination ausgewählt aus: Polyethylenterephthalat (PET), Polymethylmethacrylate, Polyester, Polyacrylate, Polycarbonate, Polyethylennaphthalat (PEN), Polyamide, Acrylnitril-Butadien-Styrol-Copolymerisat (ABS), Phenole, Isocyanatgruppen-haltige Polymere, Epoxidgruppen-haltige Polymere, Melamin-haltige Polymere, Hydroxylgruppen-haltige Polymere, ausgebildet..

Auch ist es möglich, dass die zumindest eine Lackschicht 12 eingefärbt ist, insbesondere dass die zumindest eine Lackschicht12 mittels Farbstoffen und/oder Farbpigmenten eingefärbt ist. Vorzugsweise beträgt der Pigmentierungsgrad der zumindest einen Lackschicht weniger als 15 %, bevorzugt weniger als 10 %, weiter bevorzugt weniger als 5 %.

Es ist jedoch auch möglich, dass die zumindest eine Lackschicht 12 farblos ist und/oder klar transparent ist und/oder dass der Pigmentierungsgrad der Lackschicht 0 % beträgt. Hierbei wird beispielsweise der farbige Eindruck von einem unterhalb der Lackschicht angeordneten Hinterleuchtungsmitteln bestimmt.

Vorteilhafterweise ist der zumindest eine zweite Bereich 22 und/oder die zumindest eine Lackschicht 12 transparent ausgebildet und/oder der zumindest zweite Bereich 22 und/oder die zumindest eine Lackschicht 12 weisen eine Transmission, insbesondere im Wellenlängenbereich von 380 nm bis 780 nm, von mindestens 5 %, bevorzugt von mindestens 25 %, weiter bevorzugt von mindestens 75 %, noch weiter bevorzugt von mindestens 90 %, auf.

In dem zumindest einem zweiten Bereich 22 kann die zumindest eine Lackschicht 12 einschichtig angeordnet sein. Weiter ist es möglich, dass die zumindest eine Lackschicht 12 aus zwei oder mehreren Teilschichten ausgebildet wird, insbesondere wobei die Teilschichten die gleichen chemischen und physikalischen Eigenschaften aufweisen.

Weiter ist es möglich, dass die zumindest eine Lackschicht mehrschichtig angeordnet wird und/oder ist, insbesondere dass die zumindest eine Lackschicht aus zwei oder mehreren Teilschichten ausgebildet wird und/oder ist, wobei die zwei oder mehreren ersten Teilschichten bevorzugt jeweils mit einer Schichtdicke im Bereich von 0,1 $\mu$m und 50 $\mu$m, weiter bevorzugt von 0,5 $\mu$m und 5,0 $\mu$m, angeordnet werden.

Weiter ist es sinnvoll, wenn die zwei oder mehreren Teilschichten unterschiedliche Farben, insbesondere aus dem RGB-Farbraum oder dem CMYK-Farbraum, aufweisen.

Weiter ist es denkbar, dass eine der Farben der Teilschichten der zumindest einen Lackschicht bereichsweise angeordnet wird und/oder ist, insbesondere dass eine der Farben in zumindest einem ersten Teilbereich vorhanden ist und in zumindest einem zweiten Teilbereich nicht vorhanden ist und/oder dass die Teilschichten in einem Raster, insbesondere ausgewählt aus: frequenzmoduliertes Raster, amplitudenmoduliertes Raster, zufälliges Raster, pseudozufälliges Raster, angeordnet werden und/oder sind.

Es ist auch möglich, dass in Schritt c) in zumindest einem der zweiten Bereiche zumindest zwei sich unterscheidende Lackschichten eingebracht werden, wobei sich die zumindest zwei Lackschichten insbesondere in ihren optischen Eigenschaften, wie beispielsweise Farbe und/oder optische Dichte und/oder Transmission, unterscheiden.

Mit anderen Worten kann die zumindest eine Lackschicht 12 und/oder der zumindest eine zweite Bereich 22 einfarbig und/oder mehrfarbig angeordnet werden und/oder ausgestaltet sein.

Es ist weiter möglich, dass die optische Dichte eines zumindest zweiten Bereichs 22 und/oder zumindest einer Lackschicht, insbesondere bei einer vollständig mit einem einzelnen Farbton bedeckten Fläche, und/oder eines Teilbereichs zumindest eines zweiten Bereichs 22, ausgewählt ist aus einem Bereich von 0,5 bis 3, vorzugsweise von 0,8 bis 2,5, aufweisen.

Im Wesentlichen wird und/oder ist die zumindest eine Lackschicht bevorzugt nur im zweiten Bereich 22, nicht aber im ersten Bereich 21 angeordnet.

Es ist möglich, dass die zumindest eine Lackschicht 12 in Figur 1 registergenau und/oder passergenau angeordnet wird.

Die lagegenaue Positionierung kann dabei insbesondere mittels sensorischer, vorzugsweise optisch detektierbarer Passermarken oder Registermarken, optischen Sensoreinheiten, bevorzugt Kameras, Schablonen, Masken und/oder mechanischen Anschlägen erfolgen. Insbesondere können Passermarken oder Registermarken dabei entweder spezielle separate Elemente oder Bereiche oder Schichten darstellen oder selbst Teil der zu positionierenden Elemente oder Bereiche oder Schichten sein.

Die zumindest eine Lackschicht 12, die derart angeordnet wird, dass sie auf der dem Betrachter zugewandten Seite des Kunststoffartikels 1 oberhalb des Substrats 11 angeordnet ist und/oder mit der zumindest einen Dekorschicht 12 zumindest teilweise in Kontakt steht, wird bevorzugt mit einer Toleranz zu einer Sollposition von höchstens ±0,7 mm, vorzugsweise von höchstens ±0,5 mm, weiter bevorzugt von höchstens ±0,3 mm, angeordnet oder weist vorstehende Toleranz zu einer Sollposition auf.

Es ist möglich, dass die zumindest eine Lackschicht 12 in Schritt c) inline und/oder nachgeschaltet angeordnet wird. Mit anderen Worten können die Verfahrensschritte direkt hintereinander durchgeführt werden und/oder das Anordnen der zumindest einen Lackschicht 12 erst erfolgt nachdem die mit dem zumindest zweiten Bereich 22 versehene zumindest eine Folie 10, insbesondere Dekorschicht, beispielsweise zwischengelagert, transportiert und/oder aus der für das Verfahren vorgesehenen Vorrichtung entnommen wurde.

Vorteilhafterweise wird zur Durchführung des Verfahrens zum Anordnen der Lackschicht 12 ein Lack verwendet, der eine Oberflächenenergie während des Schritts c) bevorzugt ausgewählt aus einem Bereich von 15 mN/m bis 45 mN/m, bevorzugt von 20 mN/m bis 35 mN/m aufweist. Weiter ist es von Vorteil, wenn die Oberflächenenergie der zumindest einen Folie 10, insbesondere der Dekorschicht, und/oder des Substrats 11 während des Schritts c) ausgewählt wird aus einem Bereich von 30 mN/m bis 50 mN/m, bevorzugt von 30 mN/m bis 45 mN/m.

Bevorzugt beträgt die Differenz zwischen der Oberflächenspannung des Lacks der zumindest einen Lackschicht und der zumindest einen Folie, insbesondere der Dekorschicht, und/oder dem Substrat mindestens einen Wert ausgewählt aus einem Bereich von ±5 mN/m bis ±100 mN/m, bevorzugt von ±10 mN/m bis ±70 mN/m und maximal einen Wert ausgewählt aus einem Bereich von ±15 mN/m bis ±50 mN/m, bevorzugt von ±20 mN/m bis ±35 mN/m. Bevorzugt weist die zumindest eine Folie, insbesondere die Dekorschicht, und/oder das Substrat während Schritt c) eine größere Oberflächenenergie im Vergleich zum aufzutragenden Lack der zumindest einen Lackschicht auf.

Bevorzugt wird in dem zumindest einen zweiten Bereich 22 die zumindest eine Lackschicht 12 mit einer Schichtdicke ausgewählt aus einem Bereich von 2 μm bis 36 μm, bevorzugt von 4 μm bis 18 μm, bevorzugt von 5 μm bis 12 μm, angeordnet.

Insbesondere wäre es in Figur 1 auch denkbar, dass alternativ oder zusätzlich in zumindest einem zweiten Bereich 22 keine Lackschicht 12 angeordnet wird und/oder ist, so dass das Substrat 11 in diesem Bereich in Betrachtungsrichtung 20 die oberste Schicht ausbildet.

Bevorzugt ist das Substrat 11 einschichtig oder mehrschichtig aus thermoplastischen Materialien, einzeln oder in Kombination ausgewählt aus PC, PET, PMMA, PEN, PA, ABS ausgebildet.

Vorteilhafterweise ist das Substrat 11 transparent oder semitransparent ausgebildet und/oder das Substrat 11 weist eine Transmission, insbesondere im Wellenlängenbereich von 380 nm bis 780 nm, von mindestens 10 %, bevorzugt von mindestens 25 %, weiter bevorzugt von mindestens 75 %, noch weiter bevorzugt von mindestens 90 %, auf.

Weiter ist es möglich, dass das Verfahren weiter folgenden Schritt umfasst, insbesondere der vor Schritt c) und/oder Schritt g) durchgeführt wird:

h) Vorbehandlung der Oberfläche des Substrats 11, und/oder der zumindest einen Folie 10, insbesondere der Dekorschicht, insbesondere mittels eines oder mehrerer der folgenden Verfahren: Coronabehandlung, Beflammung, Reinigung, Plasmabehandlung.

Bevorzugt weist das Substrat 11 eine Schichtdicke ausgewählt aus einem Bereich von 0,25 mm bis 20 mm, insbesondere von 1 mm bis 5 mm auf.

Vorteilhafterweise ist der während des Verfahrens in Schritt b) verwendete und/oder der in der Vorrichtung vorhandene zumindest eine Laser bevorzugt ausgewählt aus: Festkörperlaser, bevorzugt Faserlaser, YAG-Laser, UV-Laser, Rubinlaser und/oder Saphirlaser, Diodenlaser, Gaslaser und/oder Farbstofflaser.

Auch vorteilhaft ist, dass der zumindest eine Laser bevorzugt kohärentes Licht aus dem Infrarotbereich, insbesondere aus dem nahen Infrarotbereich, weiter bevorzugt aus dem Wellenlängenbereich von 200 nm bis 1400 nm, bevorzugt von 780 nm bis 1200 nm, weiter bevorzugt Licht der Wellenlänge 1064 nm, emittiert. Alternativ kann auch ein Laser verwendet werden, der insbesondere kohärentes Licht aus dem UV-Bereich, weiter bevorzugt mit einer Wellenlänge von 340 nm bis 400 nm, weiter bevorzugt Licht der Wellenlänge 355 nm, emittiert. Weiter kann der Laser kontinuierlich oder gepulst betrieben werden.

Es ist weiter auch möglich, dass in dem Schritt b) der zumindest eine Laser mit einem Strahldurchmesser im Fokuspunkt von mindestens 30 μm, bevorzugt mindestens 50 μm, bevorzugt mindestens 100 μm, verwendet wird.

Auch ist es möglich, den Laserstrahl mittels zumindest einer Linse, insbesondere mit einer Brennweite in einem Bereich von 100 mm bis 500 mm, bevorzugt von 150 mm bis 300 mm, weiter bevorzugt von 163 mm oder 254 mm, zu fokussieren.

Es ist zweckmäßig, wenn in dem Schritt b) der Laserstrahl mittels auslenkbarer Spiegel, insbesondere mittels eines Laser-Scan-Moduls, entlang des zumindest einen zweiten Bereichs 22 gelenkt wird.

Der Laserstrahl kann insbesondere mit einer Toleranz zu einer Sollposition von höchstens ±0,5 mm, vorzugsweise von höchstens ±0,3 mm, weiter bevorzugt von höchstens ±0,1 mm, gesteuert werden oder der so mittels Laser erzeugte zweite Bereich 22 weist eine Toleranz zu einer Sollposition von höchstens ±0,5 mm, vorzugsweise von höchstens ±0,3 mm, weiter bevorzugt von höchstens ±0,1 mm auf.

Bevorzugt weist der zumindest eine Laser eine Leistung ausgewählt aus einem Bereich von 0,05 W bis 100 W, bevorzugt von 1 W bis 50 W, weiter bevorzugt von 5 W bis 20W, auf. Insbesondere wird der zumindest eine Laser mit einer Schreibgeschwindigkeit von maximal 10.000 mm/s, bevorzugt mit einer Schreibgeschwindigkeit ausgewählt aus einem Bereich von 500 m/s bis 2500 mm/s, betrieben.

Weiter wird der zumindest eine Laser insbesondere mit einer Pulsfrequenz ausgewählt aus einem Bereich von 1 Hz bis 1000 kHz, bevorzugt von 25 kHz und 400 kHz, betrieben und/oder der zumindest eine Laser wird mit bis zu 3000 Zeichen/s, bevorzugt ausgewählt aus einem Bereich von 800 Zeichen/s bis 1500 Zeichen/s, betrieben. Die benötigte Intensität des Laserstrahls richtet sich nach der Art und Dicke der zumindest einen Folie 10, insbesondere der Dekorschicht, sowie auch der Geschwindigkeit, mit der die zumindest eine Folie 10, insbesondere die Dekorschicht, entfernt werden soll.

Bevorzugt wird in Schritt c) eines der folgenden Digitaldruckverfahren verwendet insbesondere zum Anordnen der zumindest einen Lackschicht 12: Inkjet, insbesondere Continuous Ink Jet und/oder Piezo-elektrischer Inkjet und/oder thermoelektrischer Inkjet (BubbleJet), und/oder Thermodruck.

Bevorzugt wird zur Herstellung des Kunststoffartikels 1 nach Figur 1 in Schritt c) die Größe eines einzelnen Tropfens beim Anordnen der zumindest einen Lackschicht 12 mittels Drucken ausgewählt aus einem Bereich von 2 pl bis 50 pl, bevorzugt von 2,5 pl bis 30 pl, ist. Weiter ist es auch möglich, dass 2 bis 10 Tropfen, bevorzugt 3 bis 7 Tropfen, beim Anordnen kombiniert werden.

Auch ist bevorzugt, dass in Schritt c) die dynamische Viskosität des Lacks der zumindest einen Lackschicht 12 während des Druckvorgangs ausgewählt wird aus einem Bereich von 3 mPas bis 100 mPas, vorzugsweise von 4 mPas bis 80 mPas, vorzugweise von 5 mPas bis 50 mPas.

Die Auflösung des Druckkopfs in Schritt c) beträgt bevorzugt zwischen 300 und 1200 npi (Auftragsdüsen pro Zoll, npi = nozzles per inch). Dadurch wird die Auflösung des Drucks quer zu einer Vorschubrichtung des Substrats und/oder des Druckkopfes bestimmt. Die Auflösung entlang der Vorschubrichtung des Substrats und/oder des Druckkopfes wird durch die Genauigkeit dieses Vorschubs durch entsprechend genau gesteuerte Antriebe bestimmt und beträgt vorzugsweise zwischen 300 dpi und 4800 dpi.

Auch ist es möglich, dass das Verfahren den folgenden weiteren Schritt umfasst, der insbesondere vor und/oder nach Schritt b) und/oder Schritt c) durchgeführt wird:

 i) Umformen der zumindest einen Folie 10, insbesondere der Dekorschicht, und/oder des Substrats (11), bevorzugt mittels Vakuum oder Hochdruck oder Tiefziehwerkzeugen.

Hierbei können insbesondere übliche Tiefziehverfahren angewendet werden. In der Regel wird die zumindest eine Folie 10, insbesondere Dekorschicht, und/oder das Substrat 12 als Bogenware bereitgestellt und in ein Tiefziehwerkzeug eingelegt, welches die gewünschte Endkontur aufweist. Durch die Applikation von Wärme, bevorzugt einer Temperatur von 80°C bis 200°C, wird die zumindest eine Folie 10, insbesondere Dekorschicht, und/oder das Substrat 11 verformbar gemacht. Nun kann die zumindest eine Folie 10, insbesondere die Dekorschicht, und/oder das Substrat durch Anlegen von Vakuum und/oder durch Applikation eines Formstempels und/oder Luftüberdruck an die Form des Tiefziehwerkzeuges angepasst und damit in die gewünschte Endkontur gebracht werden. Beim Abkühlen härten das Material der Folie 10, insbesondere der Dekorschicht, und/oder das Substrat 11 dann wieder aus, so dass diese die Endkontur beibehalten.

Nach dem Tiefziehen kann gegebenenfalls noch eine mechanische Nachbearbeitung erfolgen, beispielsweise durch Beschneiden, bevorzugt mechanisch oder mittels Laser oder Fräsen oder Stanzen oder dergleichen.

Insbesondere wird in Schritt d) die Lackschicht 12 und/oder die zumindest eine Folie 10, insbesondere die Dekorschicht, thermisch und/oder durch energiereiche Strahlung, bevorzugt UV-Strahlung, ausgehärtet. Insbesondere erfolgt die Härtung vor und/oder nach der Anordnung der zumindest einen Folie 10, insbesondere der Dekorschicht, auf dem Substrat 11. Bevorzugt weist die Vorrichtung hierzu zumindest eine UV-Lampe, insbesondere eine Quecksilberdampflampe und/oder UV-LED-Lampe, und/oder zumindest ein IR-Heizelement auf.

Bevorzugt erfolgt das Aushärten in Schritt d) mittels UV-Strahlung mit einer Strahlendosis ausgewählt aus dem Bereich von 800 mJ/cm$^2$ bis 1200 mJ/cm$^2$ und/oder einer Intensität von mindestens 550 mW/cm$^2$ und/oder bei einer Wellenlänge im Bereich von 200 nm bis 280 nm. Insbesondere weist die zumindest eine Folie 10, insbesondere die Dekorschicht, und/oder das Substrat 11 nach Schritt d) eine andere Oberflächenenergie auf als sie während Schritt c) aufweisen.

Natürlich ist es abhängig vom Verwendungsgebiet des Kunststoffartikels 1 insbesondere denkbar, diesen in einem weiteren Verfahrensschritt oder einem weiteren Verfahren in eine Spritzgussform einzulegen und mit einer Kunststoffspritzmasse zu hinterspritzen. Weiter ist es möglich davor und/oder danach zumindest ein Funktionselement, insbesondere eine Hinterleuchtungsvorrichtung 30, insbesondere umfassend organische Leuchtdioden (OLED), anorganische Leuchtdioden (LED), MikroLEDs (mLED) und/oder Quantenpunkt-Leuchtdioden (QLED), und/oder einen berührungssensitiven Sensor (Touchsensor) und/oder weitere funktionelle Komponenten wie beispielsweise eine Steuerungselektronik und/oder mechanische und/oder elektrisch leitende Verbindungskomponenten und/oder elektromagnetische Abschirmungen und/oder thermische Abschirmungen und/oder optische Abschirmungen anzubringen. Das Funktionselement kann mit dem Kunststoffartikel 1 fest verbunden sein, insbesondere durch Kleben oder Laminieren.

Das Funktionselement wird vorzugweise auf der in Betrachtungsrichtung 20 abgewandten Seite des Kunststoffartikels 1 angebracht. Weiter kann das Funktionselement zusätzlich oder alternativ elektrische Leitungen und/oder elektrische/elektronische Bauelemente aufweisen.

Der Kunststoffartikel 1 in Figur 1 kann beispielsweise mit einem Display und/oder mit einem Touchfeld und/oder mit einem Panel verwendet werden. Insbesondere hat einer der folgenden Bereiche für die Verwendung des Kunststoffartikels 1 erwiesen: Weiße Ware, Kraftfahrzeuge, Luftfahrt, Schiffe, Haushaltsgeräte, Telekommunikationsgeräte, Konsumgüter, und/oder Elektronikartikel.

Für die Vorrichtung kann es vorteilhaft sein, wenn diese weiter noch Vorratsrollen zum Bereitstellen der zumindest einen Folie 10, insbesondere der Dekorschicht, und/oder des Substrats 11, Fördereinrichtungen für die zumindest eine Folie 10, insbesondere die Dekorschicht, und/oder des Substrats, eine Walzenanordnung zum Anordnen von beispielsweise Haftvermittlern, eine Abzieheinheit zum Abziehen einer Trägerfolie von zumindest einem Teilbereich der Transferlage, eine Umformvorrichtung, eine Vorrichtung zur Vorbehandlung der Oberfläche des Substrats 11 und/oder der Folie 10, insbesondere der Dekorschicht, eine Vorrichtung zur mechanische Nachbearbeitung des Kunststoffartikels 1 und dergleichen aufweist, was insbesondere zur Durchführung des vorstehend beschriebenen Verfahrens notwendig ist.

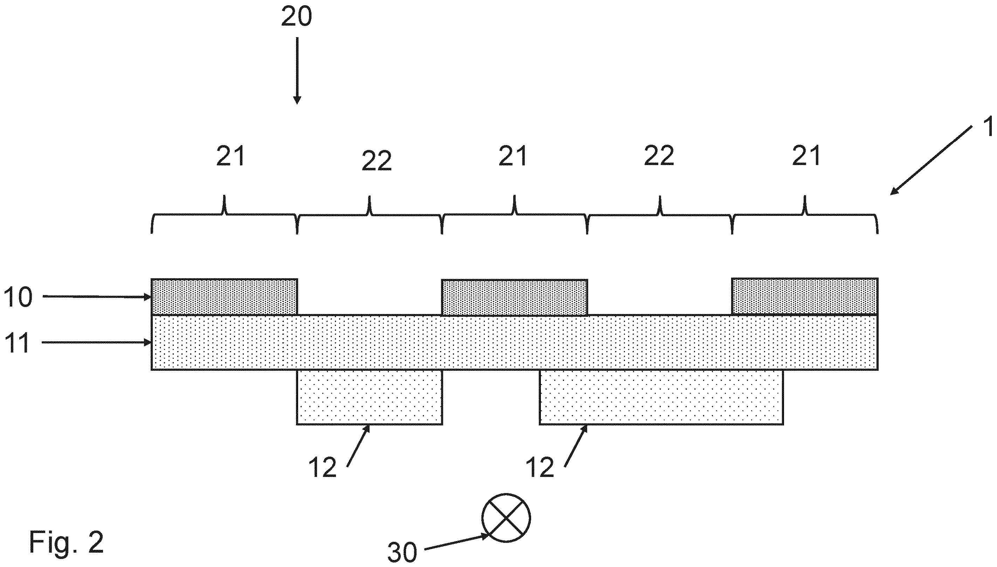

Figur 2 zeigt eine schematische Schnittdarstellung eines weiteren Kunststoffartikels 1. Der Kunststoffartikel 1 in Figur 2 basiert im Wesentlichen auf den Aufbau des Kunststoffartikels 1 und dem Verfahren zur Herstellung des Kunststoffartikels 1 nach Figur 1.

So weist auch der Kunststoffartikel 1 in Figur 2 ein Substrat 11 und zumindest eine Folie 10, insbesondere eine Dekorschicht, auf. In Betrachtungsrichtung 20 auf die vom Substrat 11 ausgebildete Ebene umfasst der Kunststoffartikel 1 zumindest ebenso zumindest einen ersten Bereich 21 und zumindest einen zweiten Bereich 21. Auch ist der Kunststoffartikel 1 durchleuchtbar, insbesondere durchleuchtbar mit einer Hinterleuchtungsvorrichtung 30.

Weiter kann das Verfahren zur Herstellung des Kunststoffartikels 1 in der gleichen Vorrichtung wie zur Herstellung des Kunststoffartikel 1 in Figur 1 durchgeführt werden.

Der wesentliche Unterschied zu dem Kunststoffartikel 1 nach Figur 1 ist, dass die zumindest eine Lackschicht 12 in Betrachtungsrichtung 20 auf der abgewandten Seite des Substrats 11 angeordnet ist. Mit anderen Worten ist die zumindest eine Lackschicht 12 unterhalb des Substrats 11 in Betrachtungsrichtung 20 angeordnet.

Weiter kann die in zumindest einem zweiten Bereich 22 angeordnete zumindest eine Lackschicht 12 im Wesentlichen nur in zumindest einem zweiten Bereich 22 und nicht in den angrenzenden ersten Bereichen 21 angeordnet sein. Es ist weiter auch möglich, dass die in zumindest einem zweiten Bereich 22 angeordnete zumindest eine Lackschicht 12 in Schritt c) mit zumindest einem der ersten Bereiche 21 bereichsweise überlappend angeordnet wird und/oder ist.

Die zumindest eine Lackschicht 12, die auf der der zumindest einen Folie 10, insbesondere Dekorschicht, abgewandten Seite des Substrats 11 angeordnet wird, ist bevorzugt mit einer Toleranz zu einer Sollposition von höchstens $\pm 5$ mm, vorzugsweise von höchstens $\pm 1$ mm, weiter bevorzugt von höchstens $\pm 0,3$ mm, angeordnet und/oder weist vorstehende Toleranz zu einer Sollposition auf. Im Vergleich eines Bedruckens oberhalb des Substrats können niedrigere Toleranzen eingehalten werden, da die zweiten Bereiche bei einer Betrachtung von oberhalb auf die zweiten Bereiche wie Masken wirken.

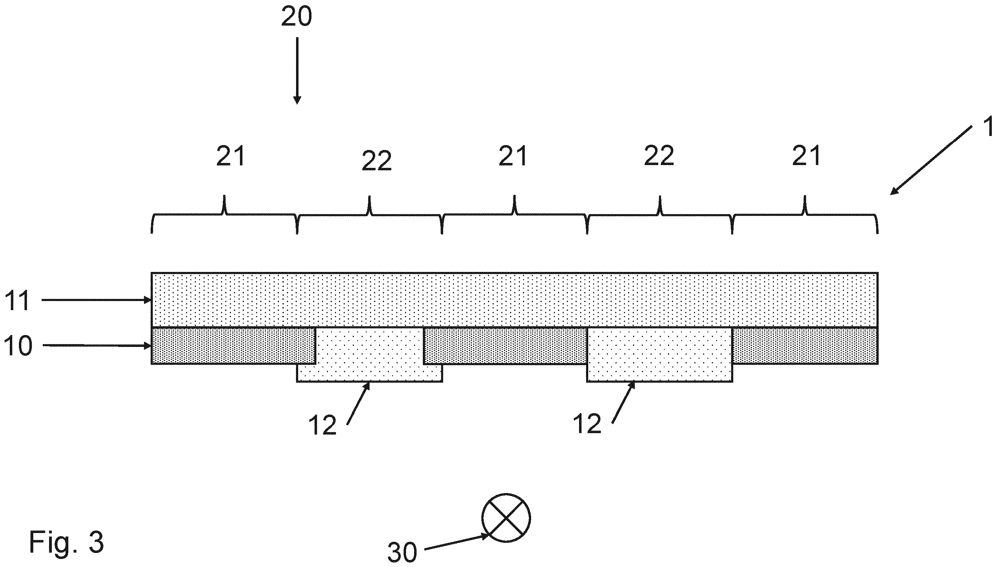

In Figur 3 ist eine schematische Schnittdarstellung eines weiteren Kunststoffartikels 1 gezeigt. Der Kunststoffartikel 1 in Figur 3 basiert im Wesentlichen auf den Aufbau des Kunststoffartikels 1 und dem Verfahren zur Herstellung des Kunststoffartikels 1 nach Figur 1 und/oder Figur 2.

Auch der Kunststoffartikel 1 in Figur 3 weist ein Substrat 11 und zumindest eine Folie 10, insbesondere Dekorschicht, auf. Weiter umfasst der Kunststoffartikel 1 in Betrachtungsrichtung 20 auf die vom Substrat 11 ausgebildeten Ebene ebenso zumindest einen ersten Bereich 21 und zumindest einen zweiten Bereich 22 und ist durchleuchtbar, insbesondere durchleuchtbar mit einer Hinterleuchtungsvorrichtung 30.

Das Verfahren zur Herstellung des Kunststoffartikels 1 kann in der gleichen Vorrichtung wie das Verfahren zur Herstellung des Kunststoffartikels 1 nach Figur 1 durchgeführt werden.

Der Kunststoffartikel 1 nach Figur 3 unterscheidet sich im Wesentlichen, von den Kunststoffartikeln 1 nach Figur 1 und/oder Figur 2, dass die zumindest eine Folie 10, insbesondere die Dekorschicht, und die zumindest in den zweiten Bereichen 22 angeordnete Lackschicht 12 in Betrachtungsrichtung unterhalb des Substrats 11 angebracht ist. Hierbei kann die zumindest eine Lackschicht 12 im Wesentlichen nur zumindest einen zweiten Bereich 22 angeordnet und/oder mit zumindest einem ersten Bereich 21 überlappend angeordnet werden und/oder sein.

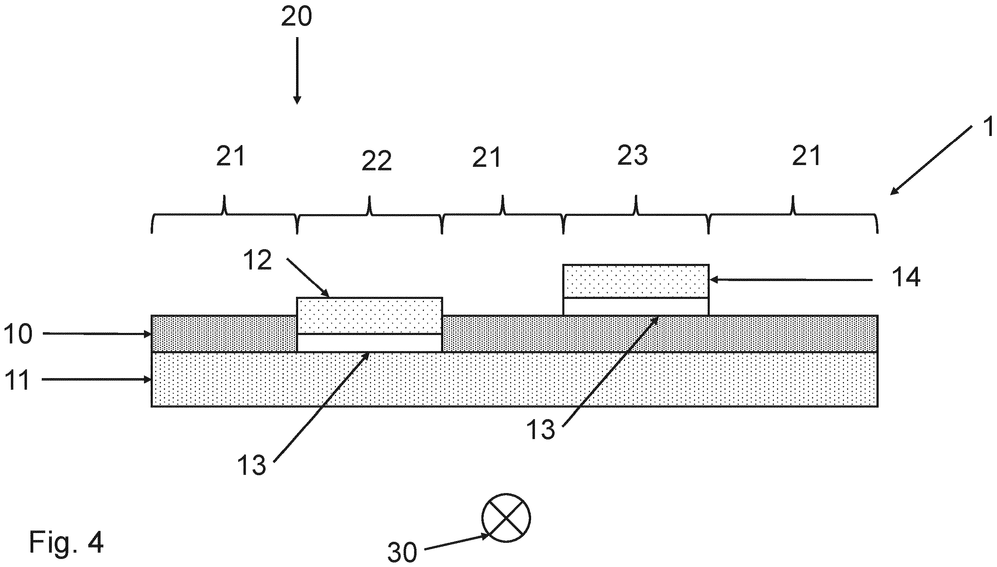

Figur 4 zeigt eine schematische Schnittdarstellung eines Kunststoffartikels 1. Der Kunststoffartikel 1 kann bevorzugt mittels den bezüglich Figur 1, 2 oder 3 beschriebenen Verfahrens und/oder Vorrichtung hergestellt werden. Der in Figur 4 gezeigte Kunststoffartikel 1 basiert insbesondere auf dem vorhergehend vorgestellten Kunststoffartikel 1 nach Figur 1. Er umfasst ebenso ein Substrat 11 und zumindest eine in Betrachtungsrichtung 20 oberhalb des Substrats 11 angeordnete Folie 10, insbesondere Dekorschicht. In Betrachtungsrichtung 20 auf die vom Substrat ausgebildete Ebene weist der Kunststoffartikel 1 zumindest einen ersten Bereich 21 und zumindest einen mittels Laser eingebrachten zweiten Bereich 22 auf. In dem zumindest einen zweiten Bereich 22 wird und/oder ist zumindest eine Lackschicht 12 angeordnet.

Auch ist es möglich, dass in zumindest einem zweiten Bereich 22 eine Grundierung 13 angeordnet wird, bevor die zumindest eine Lackschicht 12 angeordnet wird. Insbesondere ist die Grundierung 13 zwischen dem Substrat 11 und/oder der zumindest einen Folie 10, insbesondere der Dekorschicht, und der zumindest einen Lackschicht 12 angeordnet.

Bevorzugt weist die Grundierung 13 eine Transmission, insbesondere im Wellenlängenbereich von 380 nm bis 780 nm, von mindestens 10 %, bevorzugt von mindestens 25 %, weiter bevorzugt von mindestens 75 %, noch weiter bevorzugt von mindestens 90 %, auf. Auch ist es möglich, dass die Grundierung 13 eingefärbt ist, bevorzugt weiß eingefärbt ist, insbesondere dass die Grundierung 13 mittels Farbstoffen und/oder Farbpigmenten eingefärbt ist. Vorzugsweise beträgt der Pigmentierungsgrad der Grundierung 13 weniger als 15 %, bevorzugt weniger als 10 %, weiter bevorzugt weniger als 5 %.

Es ist jedoch auch möglich, dass die Grundierung 13 farblos ist und/oder klar transparent ist und/oder dass der Pigmentierungsgrad der Grundierung 13 0 % beträgt.

Bevorzugt wird die Grundierung 13 mit einer Schichtdicke ausgewählt aus einem Bereich von 0,1 $\mu$m bis 10 $\mu$m, bevorzugt von 0,3 $\mu$m bis 5 $\mu$m, angeordnet.

Weiter ist die zumindest eine Folie 10, insbesondere die Dekorschicht, überdruckbar und das Verfahren zur Herstellung eines Kunststoffartikels nach Figur 3 umfasst weiter folgenden Schritt, insbesondere der vor Schritt d) und/oder vor und/oder nach Schritt c) durchgeführt wird:

g) Bedrucken der zumindest einen Folie 10, insbesondere der Dekorschicht, mittels Digitaldruck, insbesondere mit einer Grundierung 13 und/oder mit zumindest einer Lackschicht 12, bevorzugt umfassend einen Haptiklack, wobei zumindest ein dritter Bereich 23 ausgebildet wird und wobei der zumindest eine dritte Bereich 23 sich nicht mit dem zumindest einen zweiten Bereich 22 überlappt.

Bevorzugt kann für Ausgestaltung des zumindest einen dritten Bereichs 23 in Figur 4 auf die vorstehend aufgeführten Ausgestaltungvarianten des zumindest einen zweiten Bereichs 22 zurückgegriffen werden, insbesondere hinsichtlich den Druckverfahren und/oder den Druckparametern und/oder den Druckvorrichtungen.

Alternativ oder zusätzlich kann der zumindest eine dritte Bereich 23 opak ausgebildet sein und/oder eine Remission, insbesondere im Wellenlängenbereich von 380 nm bis 780 nm, von maximal 0,5, bevorzugt von maximal 0,2, weiter bevorzugt von maximal 0,05, aufweisen.

Beispielsweise kann zum Anordnen des zumindest einen dritten Bereichs 23 derselbe Druckkopf verwendet werden, der auch zum Anordnen des zumindest zweiten Bereichs 22 verwendet wird. Damit kann die Bedruckung in Schritt g) insbesondere inline durchgeführt werden kann. Alternativ kann Schritt g) auch nachgeschaltet durchgeführt werden. Insbesondere ist es vorteilhaft den zumindest einen dritten Bereich 23 dort anzuordnen, wo keine Hinterleuchtungsmittel 30 angebracht werden. Bevorzugt überlappen, sich der zumindest eine erste Bereich 21 und der zumindest eine dritte Bereich 23 zumindest bereichsweise und/oder vollständig.

Selbstverständlich können die aufgeführten Ausführungsvarianten, insbesondere hinsichtlich der ersten, zweiten und dritten Bereiche und oder den Verfahrensschritten oder deren Reihenfolgen, beliebig miteinander kombiniert werden und stellen keine Limitierung dar.

_(Bezugszeichenliste)_

| | |
|---|---|
| 1 | Kunststoffartikel |
| 10 | Folie, Dekorschicht |
| 11 | Substrat |
| 12 | Lackschicht |
| 13 | Grundierung |
| 14 | Lackschicht |
| 20 | Betrachtungsrichtung |
| 21 | erster Bereich |
| 22 | zweiter Bereich |
| 23 | dritter Bereich |
| 30 | Hinterleuchtungsmittel |

**Patentansprüche**

1. Verfahren zur Herstellung eines Kunststoffartikels (1),
   welches die folgenden Schritte umfasst, welche insbesondere in der folgenden Reihenfolge durchgeführt werden:

a) Bereitstellen zumindest einer Folie (10) umfassend eine Trägerfolie und zumindest eine Dekorschicht,

b) Ausbilden mittels eines Lasers zumindest eines ersten Bereichs (21) und zumindest eines zweiten Bereichs (22) in der von der zumindest einen Folie (10), insbesondere von der Dekorschicht, ausgebildeten Ebene, wobei der zumindest eine zweite Bereich (22) eine höhere Transmission als der zumindest erste Bereich (21) aufweist,

c) Anordnen zumindest einer Lackschicht (12) in dem zumindest einem zweiten Bereich (22) mittels Digitaldruck,

d) Aushärten, insbesondere gleichzeitiges Aushärten, der zumindest einen Folie (10), insbesondere der Dekorschicht, und/oder der zumindest einen Lackschicht (12),

e) Anordnen der zumindest einen Folie (10), insbesondere der Dekorschicht, auf einem Substrat (11),

f) Erhalt eines Kunststoffartikels (1) umfassend den zumindest einen ersten Bereich (21) und den zumindest einen zweiten Bereich (22).

2. Verfahren nach Anspruch 1,
**dadurch gekennzeichnet,**
**dass** in Schritt a) die zumindest eine Folie (10) als eine Transferfolie oder Laminierfolie bereitgestellt wird.

3. Verfahren nach Anspruch 1 oder 2,
**dadurch gekennzeichnet,**

**dass** in Schritt b) die zumindest eine Folie (10), insbesondere Dekorschicht, in dem zumindest einen zweiten Bereich (22) entfernt, vorzugsweise vollständig entfernt, wird,
und/oder
**dass** in Schritt b) der zumindest eine Laser mit einer Schreibgeschwindigkeit von maximal 10.000 mm/s, bevorzugt mit einer Schreibgeschwindigkeit ausgewählt aus dem Bereich von 500 m/s bis 2500 mm/s, betrieben wird und/oder dass der zumindest eine Laser mit einer Pulsfrequenz ausgewählt aus dem Bereich von 1 Hz bis 1000 kHz, bevorzugt zwischen 25 kHz und 400 kHz, mit bis zu 3000 Zeichen/s, bevorzugt im Bereich von 800 Zeichen/s bis 1500 Zeichen/s, betrieben wird,
und/oder
**dass** zumindest ein zweiter Bereich (22) in Form von einem Symbol, einer geometrischen Figur, einem Muster, einem alphanumerischen Zeichen und/oder einem Logo ausgestaltet wird oder diese umfasst, und/oder
**dass** der zumindest eine Laser kontinuierlich oder gepulst betrieben wird.

4. Verfahren nach einem der vorhergehenden Ansprüche,
**dadurch gekennzeichnet,**
**dass** in zumindest einem zweiten Bereich (22), insbesondere vor Schritt c), eine Grundierung (13) angeordnet wird, bevor die zumindest eine Lackschicht (12) angeordnet wird.

5. Verfahren nach einem der vorhergehenden Ansprüche,
**dadurch gekennzeichnet,**

**dass** das Verfahren weiter folgenden Schritt umfasst, insbesondere der vor Schritt d) und/oder vor und/oder nach Schritt c) durchgeführt wird:
g) Bedrucken der zumindest einen Folie (10), insbesondere der Dekorschicht, mittels Digitaldruck, insbesondere mit einer Grundierung (13) und/oder mit zumindest einer Lackschicht (12), bevorzugt umfassend einen Haptiklack, wobei zumindest ein dritter Bereich (23) ausgebildet wird und wobei der zumindest eine dritte Bereich (23) sich nicht mit dem zumindest einen zweiten Bereich (22) überlappt,
und/oder
**dass** Schritt c) und/oder Schritt g) inline und/oder nachgeschaltet durchgeführt wird.

6. Verfahren nach einem der vorhergehenden Ansprüche,
**dadurch gekennzeichnet,**

**dass** in Schritt c) eines der folgenden Digitaldruckverfahren verwendet wird: Inkjet, insbesondere Continuous Ink Jet und/oder Piezo-elektrischer Inkjet und/oder thermoelektrischer Inkjet (Bubble-Jet), und/oder Thermodruck, und/oder
**dass** in Schritt c) die zumindest eine Lackschicht (12) in Kontakt mit der zumindest einen Folie (10), insbesondere der Dekorschicht, stehend angeordnet wird und/oder auf der der Folie (10), insbesondere der Dekorschicht, abgewandten Seite des Substrats (11) angeordnet wird, und/oder
**dass** in Schritt c) die zumindest eine Lackschicht (12) zumindest partiell mit dem zumindest einen ersten Bereich (21) überlappend angeordnet wird,
und/oder
**dass** in Schritt c) in zumindest einem zweiten Bereich (22) zumindest zwei sich unterscheidende Lackschichten (12) eingebracht werden, wobei sich die zumindest zwei Lackschichten (12) insbesondere in ihren optischen Eigenschaften unterscheiden.

7.  Verfahren nach einem der vorhergehenden Ansprüche,
**dadurch gekennzeichnet,**

**dass** in zumindest einem zweiten Bereich (22) keine Lackschicht (12) angeordnet wird,
und/oder
**dass** in zumindest einem zweiten Bereich (22) die zumindest eine Lackschicht (12) mit einer Schichtdicke ausgewählt aus einem Bereich von 2 μm bis 36 μm, bevorzugt 4 μm bis 18 μm, bevorzugt 5 μm bis 12 μm, angeordnet wird,

8.  Verfahren nach einem der vorhergehenden Ansprüche,
**dadurch gekennzeichnet,**

**dass** in zumindest einem zweiten Bereich (22) zumindest eine Lackschicht (12) einschichtig ausgebildet ist oder dass die zumindest eine Lackschicht (12) aus zwei oder mehreren Teilschichten ausgebildet ist, insbesondere wobei die Teilschichten die gleichen chemischen und physikalischen Eigenschaften aufweisen, insbesondere wobei die zwei oder mehreren Teilschichten zumindest einer Lackschicht (12) unterschiedliche Farben, insbesondere aus dem RGB-Farbraum oder dem CMYK-Farbraum, aufweisen und/oder dass eine der Farben der Teilschichten zumindest einer Lackschicht (12) bereichsweise angeordnet wird, insbesondere dass eine der Farben in zumindest einem ersten Teilbereich vorhanden ist und in zumindest einem zweiten Teilbereich nicht vorhanden ist und/oder dass die Teilschichten in einem Raster, insbesondere ausgewählt aus: frequenzmoduliertes Raster, amplitudenmoduliertes Raster, zufälliges Raster pseudozufälliges Raster, angeordnet werden.

9.  Verfahren nach einem der vorhergehenden Ansprüche,
**dadurch gekennzeichnet,**

**dass** die zumindest eine Lackschicht (12) registergenau und/oder passergenau angeordnet wird, insbesondere mittels sensorischer, vorzugsweise optisch detektierbarer Passermarken oder Registermarken, optischen Sensoreinheiten, bevorzugt Kameras, Schablonen, Masken und/oder mechanischen Anschlägen, und/oder
**dass** die zumindest eine Lackschicht (12), die derart angeordnet wird, dass sie auf der dem Betrachter zugewandten Seite des Kunststoffartikels (1) oberhalb des Substrats (12) angeordnet ist und/oder mit der zumindest einen Folie (10), insbesondere der Dekorschicht, zumindest teilweise in Kontakt steht, wird bevorzugt mit einer Toleranz zu einer Sollposition von höchstens ±0,7 mm, vorzugsweise von höchstens ±0,5 mm, weiter bevorzugt von höchstens ±0,3 mm, angeordnet und/oder dass die zumindest eine Lackschicht (12), die auf der der zumindest einen Folie (10), insbesondere der Dekorschicht, abgewandten Seite des Substrats (11) angeordnet ist, wird bevorzugt mit einer Toleranz zu einer Sollposition von höchstens ±5 mm, vorzugsweise von höchstens ±1 mm, weiter bevorzugt von höchstens ±0,5 mm, angeordnet.

10. Verfahren nach einem der vorhergehenden Ansprüche,
**dadurch gekennzeichnet,**
**dass** die optische Dichte zumindest eines zweiten Bereichs (22) und/oder zumindest einer Lackschicht (12), insbesondere bei einer vollständig bedeckten mit einem einzelnen Farbton bedeckten Fläche, und/oder eines Teilbereichs zumindest eines zweiten Bereichs (22), ausgewählt ist aus einem Bereich von 0,5 bis 3, vorzugsweise von 0,8 bis 2,5.

11. Verfahren nach einem der vorhergehenden Ansprüche,
**dadurch gekennzeichnet,**
**dass** in Schritt c) ein Lack verwendet wird, der eine Oberflächenenergie bevorzugt ausgewählt aus einem Bereich von 15 mN/m bis 45 mN/m, bevorzugt von 20 mN/m bis 35 mN/m, aufweist und/oder dass die Oberflächenenergie der zumindest einen Folie (10), insbesondere der Dekorschicht, und/oder des Substrats (11) ausgewählt wird aus einem Bereich von 30 mN/m bis 50 mN/m, bevorzugt von 30 mN/m bis 45 mN/m.

**12.** Verfahren nach einem der vorhergehenden Ansprüche,
**dadurch gekennzeichnet,**

**dass** in Schritt c) und/oder Schritt g) die Größe eines einzelnen Tropfens beim Anordnen der zumindest einen Lackschicht (12) mittels Drucken ausgewählt aus einem Bereich von 2 pl bis 50 pl, bevorzugt von 2,5 pl bis 30 pl ist und/oder dass 2 bis 10 Tropfen, bevorzugt 3 bis 7 Tropfen, beim Anordnen kombiniert werden,
und/oder
**dass** in Schritt c) und/oder Schritt g) die dynamische Viskosität des Lacks der zumindest einen Lackschicht (12) während des Druckvorgangs ausgewählt wird aus einem Bereich von 3 mPas bis 100 mPas, vorzugsweise von 4 mPas bis 80 mPas, vorzugweise von 5 mPas bis 50 mPas,
und/oder
**dass** in Schritt c) und/oder Schritt g) die Auflösung eines Druckkopfs zwischen 300 npi und 1200 npi beträgt.

**13.** Verfahren nach einem der vorhergehenden Ansprüche,
**dadurch gekennzeichnet,**

**dass** in Schritt e) die zumindest eine Folie (10), insbesondere Dekorschicht, vollflächig auf dem Substrat (11) angeordnet wird,
und/oder
**dass** in Schritt e) die zumindest eine Folie 10, insbesondere die Dekorschicht, mit einem Transferlackverfahren, insbesondere einem Heißprägeverfahren und/oder einem IMD-Verfahren, und/oder mit einem Laminierverfahren, insbesondere einem IML-Verfahren, einem Insert-Molding-Verfahren und/oder PMD-Verfahren, auf das Substrat (11) angeordnet wird,
und/oder
**dass** in Schritt e) die zumindest eine Folie (10), insbesondere Dekorschicht, bereichsweise auf dem Substrat (11) angeordnet wird, wobei insbesondere das Substrat (11) für einen Betrachter sichtbar ist, bevorzugt in Blickrichtung auf die der Dekorschicht zugewandten Seite des Substrats (11).

**14.** Verfahren nach einem der vorhergehenden Ansprüche,
**dadurch gekennzeichnet,**

**dass** das Verfahren weiter folgenden Schritt umfasst, insbesondere der vor Schritt c) und/oder Schritt g) durchgeführt wird:
h) Vorbehandlung der Oberfläche des Substrats (11) und/oder der zumindest einen Folie (10), insbesondere der Dekorschicht, insbesondere mittels eines oder mehrerer der folgenden Verfahren: Coronabehandlung, Beflammung, Reinigung, Plasmabehandlung,
und/oder
**dass** das Verfahren den weiteren Schritt umfasst, der insbesondere vor und/oder nach Schritt b) und/oder Schritt c) durchgeführt wird:

i) Umformen der zumindest einen Folie (10), insbesondere der Dekorschicht, und/oder des Substrats (11), bevorzugt mittels Vakuum oder Hochdruck oder Tiefziehwerkzeugen.

**15.** Verfahren nach einem der vorhergehenden Ansprüche,
**dadurch gekennzeichnet,**

**dass** in Schritt d) die zumindest eine Lackschicht (12) und/oder die zumindest eine Folie (10), insbesondere die Dekorschicht, thermisch und/oder durch energiereiche Strahlung, bevorzugt UV-Strahlung, ausgehärtet wird, insbesondere wobei die Härtung vor und/oder nach der Anordnung der zumindest einen Folie (10), insbesondere der Dekorschicht, auf dem Substrat (11) erfolgt,
und/oder
**dass** das Aushärten in Schritt d) mittels UV-Strahlung mit einer Strahlendosis erfolgt ausgewählt aus dem Bereich von 800 mJ/cm$^2$ bis 1200 mJ/cm$^2$ und/oder einer Intensität von mindestens 550 mW/cm$^2$ und/oder bei einer Wellenlänge von 200 nm bis 280 nm.

**Claims**

1.  Method for producing a plastic item (1),
    which comprises the following steps, which are carried out in particular in the following order:

    a) providing at least one film (10) comprising a carrier film and at least one decorative layer,
    b) forming at least one first region (21) and at least one second region (22) in the plane formed by the at least one film (10), in particular by the decorative layer, by means of a laser, wherein the at least one second region (22) has a higher degree of transmission than the at least first region (21),
    c) arranging at least one lacquer layer (12) in the at least one second region (22) by means of a digital print,
    d) curing, in particular simultaneously curing, the at least one film (10), in particular the decorative layer, and/or the at least one lacquer layer (12),
    e) arranging the at least one film (10), in particular the decorative layer, on a substrate (11),
    f) receiving a plastic item (1) comprising the at least one first region (21) and the at least one second region (22).

2.  Method according to claim 1,
    **characterised in that**
    in step a) the at least one film (10) is provided as a transfer film or laminating film.

3.  Method according to claim 1 or 2,
    **characterised in that**

    in step b) the at least one film (10), in particular decorative layer, in which at least one second region (22) is removed, is preferably completely removed,
    and/or
    in step b) the at least one laser is operated with a maximum writing speed of 10,000 mm/s, preferably with a writing speed selected from the range of 500 m/s to 2500 mm/s, and/or the at least one laser is operated with a pulse frequency selected from the range from 1 Hz to 1000 kHz, preferably between 25 kHz and 400 kHz, with up to 3000 characters, preferably in the range from 800 characters to 1500 characters,
    and/or
    at least one second region (22) is designed in the shape of a symbol, a geometric figure, a pattern, an alphanumerical sign and/or a logo or comprises this,
    and/or
    the at least one laser is operated continuously or pulsed.

4.  Method according to one of the preceding claims,
    **characterised in that**
    a foundation (13) is arranged in at least one second region (22) in particular before step c), before the at least one lacquer layer (12) is arranged.

5.  Method according to one of the preceding claims,
    **characterised in that**

    the method comprises a further following step, in particular which is carried out before step d) and/or before and/or after step c):
    g) printing the at least one film (10), in particular the decorative layer, by means of digital printing, in particular having a foundation (13) and/or having at least one lacquer layer (12), preferably comprising a tactile lacquer, wherein at least one third region (23) is formed and wherein the at least one third region (23) does not overlap with the at least one second region (22),
    and/or
    step c) and/or step g) is carried out inline and/or connected downstream.

6.  Method according to one of the preceding claims,
    **characterised in that**

    in step c) one of the following digital printing methods is used: Inkjet, in particular continuous Inkjet and/or piezoelectric Inkjet and/or thermoelectric Inkjet (Bubble-jet) and/or thermal printing,
    and/or

in step c) the at least one lacquer layer (12) is arranged in contact with the at least one film (10), in particular the decorative layer, and/or is arranged on the side of the substrate (11) facing away from the film (10), in particular the decorative layer, and/or

in step c) the at least one lacquer layer (12) is arranged at least partially overlapping with the at least one first region (21),

and/or

in step c) at least two different lacquer layers (12) are applied in at least one second region (22), wherein the at least two lacquer layers (12) differ, in particular in their visual properties.

7. Method according to one of the preceding claims,
**characterised in that**

a lacquer layer (12) is not arranged in the at least one second region (22),
and/or
the at least one lacquer layer (12) is arranged in at least one second region (22) having a layer thickness selected from a range from 2 $\mu$m to 36 $\mu$m, preferably 4 $\mu$m to 18 $\mu$m, preferably 5 $\mu$m to 12 $\mu$m.

8. Method according to one of the preceding claims,
**characterised in that**

at least one lacquer layer (12) is designed as a single-layer in at least one second region (22) or the at least one lacquer layer (12) is formed from two or more partial layers, in particular wherein the partial layers have the same chemical and physical properties,

in particular wherein the two or more partial layers of at least one lacquer layer (12) have different colours, in particular from the RGB colour space or the CMYK colour space, and/or one of the colours of the partial layers of at least one lacquer layer (12) is partially arranged, in particular one of the colours is present in at least one first partial region and is not present in at least one second partial region and/or the partial layers are arranged in a grid, in particular selected from: frequency modulated grid, amplitude modulated grid, random grid, pseudo-random grid.

9. Method according to one of the preceding claims,
**characterised in that**

the at least one lacquer layer (12) is arranged with register accuracy and/or with precision, in particular by means of sensory, preferably visually detectable registration marks or register marks, visual sensor units, preferably cameras, stencils, masks and/or mechanical stops,
and/or
the at least one lacquer layer (12) is arranged in such a way that it is arranged on the side of the plastic item (1), facing towards the observer, above the substrate (12) and/or is at least partially in contact with the at least one film (10), in particular the decorative layer, is preferably arranged with a tolerance to a target position of at most $\pm 0.7$ mm, preferably at most $\pm 0.5$ mm, more preferably of at most $\pm 0.3$ mm, and/or the at least one lacquer layer (12), which is arranged on the side of the substrate (11) facing away from the at least one film (10), in particular the decorative layer, is preferably arranged with a tolerance to a target position of at most $\pm 5$ mm, preferably at most $\pm 1$ mm, more preferably at most $\pm 0.5$ mm.

10. Method according to one of the preceding claims,
**characterised in that**
the optical density of at least one second region (22) and/or at least one lacquer layer (12), in particular with a completely covered surface, covered with a single colour tone, and/or a partial region of at least one second region (22), is selected from a range from 0.5 to 3, preferably from 0.8 to 2.5.

11. Method according to one of the preceding claims,
**characterised in that**
in step c) a lacquer is used which has a surface energy preferably selected from a range from 15 mN/m to 45 mN/m, preferably from 20 mN/m to 35 mN/m, and/or the surface energy of the at least one film (10), in particular the decorative layer, and/or the substrate (11), is selected from a range of 30 mN/m to 50 mN/m, preferably from 30 mN/m to 45 mN/m.

12. Method according to one of the preceding claims,
**characterised in that**

in step c) and/or step g) the size of a single droplet when arranging the at least one lacquer layer (12) by means of printing is selected from a range from 2 pl to 50 pl, preferably from 2.5 pl to 30 pl and/or that 2 to 10 droplets, preferably 3 to 7 droplets are combined when arranged,
and/or
in step c) and/or step g) the dynamic viscosity of the lacquer of the at least one lacquer layer (12) during the printing process is selected from a range from 3 mPas to 100 mPas, preferably from 4 mPas to 80 mPas, preferably from 5 mPas to 50 mPas,
and/or
in step c) and/or step g) the resolution of a droplet is between 300 dpi and 1200 dpi.

**13.** Method according to one of the preceding claims,
**characterised in that**

in step e) the at least one film (1), in particular the decorative layer, is arranged completely on the substrate (11),
and/or
in step e) the at least one film (10), in particular the decorative layer, is arranged with a transfer lacquer method, in particular a hot stamping method and/or an IMD method, and/or with a laminating method, in particular an IML method, an insert moulding method and/or PMD method.
and/or
in step e), the at least one film (10), in particular the decorative layer, is partially arranged on the substrate (11), wherein in particular the substrate (11) is visible for an observer, preferably in the viewing direction towards the side of the substrate (11) facing towards the decorative layer.

**14.** Method according to one of the preceding claims,
**characterised in that**

the method comprises a further following step, in particular which is carried out before step c) and/or step g):
h) pre-treatment of the surface of the substrate (11) and/or the at least one film (10), in particular the decorative layer, in particular by means of one or more of the following methods: corona discharge treatment, flame treatment, cleaning, plasma treatment, and/or
the method comprises the further step, which in particular is carried out before and/or after step b) and/or step c):

i) forming the at least one film (10), in particular the decorative layer and/or the substrate (11), preferably by means of vacuum or high-pressure or deep drawing tools.

**15.** Method according to one of the preceding claims,
**characterised in that**

in step d) the at least one lacquer layer (12) and/or the at least one film (10), in particular the decorative layer, is cured thermally and/or by high-energy radiation, preferably UV radiation, in particular wherein the curing takes place before and/or after the arrangement of the at least one film (10), in particular the decorative layer, on the substrate (11),
and/or
the curing in step d) takes place by means of UV radiation with a radiation dose selected from the range from 800 mJ/cm$^2$ to 1200 mJ/cm$^2$ and/or an intensity of at least 550 mW/cm$^2$ and/or with a wavelength of 200 nm to 280 nm.

**Revendications**

**1.** Procédé de fabrication **d'un** article plastique (1),
lequel comprend les étapes suivantes, lesquelles sont en particulier effectuées dans l'ordre suivant :

a) la fourniture d'au moins un film (10) comprenant un film support et d'au moins une couche décorative,
b) la réalisation au moyen **d'un** laser **d'au** moins une première zone (21) et d'au moins une deuxième zone (22) dans le plan réalisé par l'au moins un film (10), en particulier par la couche décorative, dans lequel l'au moins une deuxième zone (22) présente une transmission plus grande que l'au moins première zone (21),
c) la disposition d'au moins une couche de peinture (12) dans l'au moins une deuxième zone (22) par impression numérique,

d) le durcissement, en particulier durcissement simultané, de l'au moins un film (10), en particulier de la couche décorative, et/ou de l'au moins une couche de peinture (12),

e) la disposition de l'au moins un film (10), en particulier de la couche décorative, sur un substrat (11),

f) l'obtention d'un article plastique (1) comprenant l'au moins une première zone (21) et l'au moins une deuxième zone (22).

2. Procédé selon la revendication 1,
**caractérisé en ce**
**qu'**à l'étape a), l'au moins un film (10) est fourni en tant que film de transfert ou film de lamination.

3. Procédé selon la revendication 1 ou 2,
**caractérisé en ce**

**qu'**à l'étape b), l'au moins un film (10), en particulier la couche décorative, est enlevé, de préférence entièrement enlevé, dans l'au moins une deuxième zone (22),
et/ou
**qu'**à l'étape b), l'au moins un laser fonctionne avec une
vitesse d'écriture de maximum 10 000 mm/s, de préférence avec une vitesse d'écriture sélectionnée dans la plage de 500 m/s à 2 500 mm/s, et/ou que l'au moins un laser fonctionne avec une fréquence d'impulsion sélectionnée dans la plage de 1 Hz à 1 000 kHz, de préférence comprise entre 25 kHz et 400 kHz, avec jusqu'à 3 000 caractères/s, de préférence dans la plage de 800 caractères/s à 1 500 caractères/s,
et/ou
**qu'**au moins une deuxième zone (22) est conçue sous forme d'un symbole, d'une figure géométrique, d'un motif, d'un caractère alphanumérique et/ou d'un logo ou comprend ceux-ci,
et/ou
**que** l'au moins un laser fonctionne en continu ou par impulsions.

4. Procédé selon l'une quelconque des revendications précédentes,
**caractérisé en ce**
**qu'**un apprêt (13) est disposé dans au moins une deuxième zone (22), en particulier avant l'étape c), avant que l'au moins une couche de peinture (12) ne soit disposée.

5. Procédé selon l'une quelconque des revendications précédentes,
**caractérisé en ce**

**que** le procédé comprend en outre l'étape suivante, en particulier qui est effectuée avant l'étape d) et/ou avant et/ou après l'étape c) :
g) l'impression de l'au moins un film (10), en particulier de la couche décorative, par impression numérique, en particulier avec un apprêt (13) et/ou avec au moins une couche de peinture (12), comprenant de préférence une peinture haptique, dans lequel au moins une troisième zone (23) est réalisée et dans lequel l'au moins une troisième zone (23) ne chevauche pas l'au moins une deuxième zone (22),
et/ou
**que** l'étape c) et/ou l'étape g) est effectuée en ligne et/ou en aval.

6. Procédé selon l'une quelconque des revendications précédentes,
**caractérisé en ce**

**qu'**à l'étape c), l'un des procédés d'impression numérique suivants est utilisé : jet d'encre, en particulier jet d'encre continu et/ou jet d'encre piézoélectrique et/ou jet d'encre thermoélectrique (jet à bulles), et/ou impression thermique,
et/ou
**qu'**à l'étape c), l'au moins une couche de peinture (12) est disposée debout en contact avec l'au moins un film (10), en particulier la couche décorative, et/ou est disposée sur le côté du substrat (11) opposé au film (10), en particulier à la couche décorative,
et/ou
**qu'**à l'étape c), l'au moins une couche de peinture (12) est disposée au moins partiellement en chevauchement avec l'au moins une première zone (21),
et/ou

qu'à l'étape c), au moins deux couches de peinture (12) distinctes sont introduites dans au moins une deuxième zone (22), dans lequel les au moins deux couches de peinture (12) se distinguent en particulier par leurs propriétés optiques.

7. Procédé selon l'une quelconque des revendications précédentes,
**caractérisé en ce**

qu'aucune couche de peinture (12) n'est disposée dans au moins une deuxième zone (22), et/ou

que l'au moins une couche de peinture (12) avec une épaisseur de couche sélectionnée dans une plage de 2 μm à 36 μm, de préférence de 4 μm à 18 μm, de préférence de 5 μm à 12 μm, est disposée dans au moins une deuxième zone (22),

8. Procédé selon l'une quelconque des revendications précédentes,
**caractérisé en ce**

qu'au moins une couche de peinture (12) est réalisée d'une seule couche dans au moins une deuxième zone (22) ou que l'au moins une couche de peinture (12) est réalisée de deux couches partielles ou plus, en particulier dans lequel les couches partielles présentent les mêmes propriétés chimiques et physiques, en particulier dans lequel les deux couches partielles ou plus d'au moins une couche de peinture (12) présentent des couleurs différentes, en particulier issues de l'espace de couleur RVB ou de l'espace de couleur CMJN, et/ou qu'une des couleurs des couches partielles d'au moins une couche de peinture (12) est disposée par zones, en particulier qu'une des couleurs est présente dans au moins une première zone partielle et n'est pas présente dans au moins une deuxième zone partielle et/ou que les couches partielles sont disposées dans une grille, en particulier choisie parmi : une grille à modulation de fréquence, une grille à modulation d'amplitude, une grille aléatoire, une grille pseudo-aléatoire.

9. Procédé selon l'une quelconque des revendications précédentes,
**caractérisé en ce**

que l'au moins une couche de peinture (12) est disposée avec une précision de repérage et/ou de registre, en particulier au moyen de repères ou de marques de repérage sensoriels de préférence détectables optiquement, d'unités de capteurs optiques, de préférence de caméras, de gabarits, de masques et/ou de butées mécaniques, et/ou

que l'au moins une couche de peinture (12), qui est disposée de telle sorte qu'elle est disposée sur le côté de l'article plastique (1) orienté vers l'observateur au-dessus du substrat (12) et/ou est au moins partiellement en contact avec l'au moins un film (10), en particulier la couche décorative, est disposée de préférence avec une tolérance par rapport à une position théorique d'au plus ±0,7 mm, de préférence d'au plus ±0,5 mm, de préférence encore d'au plus ±0,3 mm, et/ou que l'au moins une couche de peinture (12), qui est disposée sur le côté du substrat (11) opposé à l'au moins un film (10), en particulier la couche décorative, est disposée de préférence avec une tolérance par rapport à une position théorique d'au plus ±5 mm, de préférence d'au plus ±1 mm, de préférence encore d'au plus ±0,5 mm.

10. Procédé selon l'une quelconque des revendications précédentes,
**caractérisé en ce**
que la densité optique d'au moins une deuxième zone (22) et/ou d'au moins une couche de peinture (12), en particulier dans le cas d'une surface recouverte entièrement recouverte avec une seule teinte, et/ou d'une zone partielle d'au moins une deuxième zone (22), est sélectionnée dans une plage de 0,5 à 3, de préférence de 0,8 à 2,5.

11. Procédé selon l'une quelconque des revendications précédentes,
**caractérisé en ce**
qu'à l'étape c), une peinture qui présente une énergie de surface de préférence sélectionnée dans une plage de 15 mN/m à 45 mN/m, de préférence de 20 mN/m à 35 mN/m est utilisée, et/ou que l'énergie de surface de l'au moins un film (10), en particulier de la couche décorative, et/ou du substrat (11) est sélectionnée dans une plage de 30 mN/m à 50 mN/m, de préférence de 30 mN/m à 45 mN/m.

12. Procédé selon l'une quelconque des revendications précédentes,
**caractérisé en ce**

qu'à l'étape c) et/ou l'étape g), la taille d'une goutte unique lorsque l'au moins une couche de peinture (12) est disposée par impression est sélectionnée dans une plage de 2 pl à 50 pl, de préférence de 2,5 pl à 30 pl et/ou que 2 à 10 gouttes, de préférence 3 à 7 gouttes, sont combinées lors de la disposition,
et/ou

qu'à l'étape c) et/ou à l'étape g), la viscosité dynamique de la peinture de l'au moins une couche de peinture (12) est sélectionnée pendant le processus d'impression dans une plage de 3 mPas à 100 mPas, de préférence de 4 mPas à 80 mPas, de préférence de 5 mPas à 50 mPas,
et/ou

à l'étape c) et/ou à l'étape g), la résolution d'une tête d'impression est comprise entre 300 npi et 1 200 npi.

13. Procédé selon l'une quelconque des revendications précédentes,
**caractérisé en ce**

qu'à l'étape e), l'au moins un film (10), en particulier une couche décorative, est disposé sur toute la surface du substrat (11),
et/ou

qu'à l'étape e), l'au moins un film 10, en particulier la couche décorative, est disposé sur le substrat (11) avec un procédé de peinture de transfert, en particulier un procédé de marquage à chaud et/ou un procédé IMD, et/ou avec un procédé de lamination, en particulier un procédé IML, un procédé de moulage par insertion et/ou un procédé PMD,
et/ou

qu'à l'étape e), l'au moins un film (10), en particulier la couche décorative, est disposé par endroits sur le substrat (11), dans lequel le substrat (11) est en particulier visible pour un observateur, de préférence dans le sens du regard sur le côté du substrat (11) orienté vers la couche décorative.

14. Procédé selon l'une quelconque des revendications précédentes,
**caractérisé en ce**

**que** le procédé comprend en outre l'étape suivante, en particulier qui est effectuée avant l'étape c) et/ou l'étape g) :
h) le prétraitement de la surface du substrat (11) et/ou de l'au moins un film (10), en particulier de la couche décorative, en particulier au moyen d'un ou plusieurs des procédés suivants : le traitement corona, l'exposition à la flamme, le nettoyage, le traitement par plasma,
et/ou

**que** le procédé comprend l'étape supplémentaire qui est effectuée en particulier avant et/ou après l'étape b) et/ou l'étape c) :

i) le formage de l'au moins un film (10), en particulier de la couche décorative, et/ou du substrat (11), de préférence au moyen d'un vide ou d'une haute pression ou d'outils d'emboutissage.

15. Procédé selon l'une quelconque des revendications précédentes,
**caractérisé en ce**

qu'à l'étape d), l'au moins une couche de peinture (12) et/ou l'au moins un film (10), en particulier la couche décorative, est durci(e) thermiquement et/ou par rayonnement à haute énergie, en particulier dans lequel le durcissement a lieu avant et/ou après la disposition de l'au moins un film (10), en particulier de la couche décorative, sur le substrat (11),
et/ou

**que** le durcissement à l'étape d) a lieu par rayonnement UV avec une dose de rayonnement sélectionnée dans la plage de 800 mJ/cm$^2$ à 1 200 mJ/cm$^2$ et/ou une intensité d'au moins 550 mW/cm$^2$ et/ou à une longueur d'onde de 200 nm à 280 nm.

Fig. 1

Fig. 2

EP 4 337 465 B1

Fig. 3

Fig. 4

**IN DER BESCHREIBUNG AUFGEFÜHRTE DOKUMENTE**

**In der Beschreibung aufgeführte Patentdokumente**

- DE 102018123473 A1
- EP 3815838 A1
- EP 2006119 A2
- DE 202019106340 U1